# EUROPEAN PATENT APPLICATION

(11) **EP 3 567 878 A1**
(43) Date of publication of application: **13.11.2019**
(21) Application number: 17889675.9
(22) Date of filing: 06.01.2017
(51) Int. Cl.: H04W 4/02

(54) **DEVICE AND METHOD FOR V2X COMMUNICATION**

(71) Applicant: LG Electronics Inc., Seoul 07336 (KR)
(72) Inventor: HWANG, Jaeho, Seoul 06772 (KR); KO, Woosuk, Seoul 06772 (KR)
(74) Representative: Plasseraud IP
(86) International application number: PCT/KR2017/000207
(87) International publication number: WO 2018/128206

(57) **Abstract**

A method for transmitting a V2I message of a V2X communication apparatus is disclosed. The method for transmitting a V2I message may include generating a V2I message for providing V2I service which is a service between a vehicle and an infra, the V2I message includes a first container including information commonly used for the V2I service and a second container including information used for a specific V2I service; network/transport layer-processing the V2I message; and generating a signal frame by physical layer-processing the V2I message. The first container may include message ID information representing an identifier of the V2I message.

## Description

### [Technical Field]

The present invention relates to a device and method for V2X communication, and particularly, to a method of transmitting and receiving a V2X message for V2X communication.

### [Background Art]

Nowadays, vehicles are being changed from a product of mechanical engineering to a product of complex industrial technology in which electrical, electronic, and communication technologies are converged and thus the vehicle is referred to as a smart car. The smart car connects a driver, a vehicle, and a traffic infrastructure to provide various user customized moving services as well as traditional vehicle technology such as a traffic safety/complex solution. Such connectivity may be implemented using Vehicle to Everything (V2X) communications technology.

### [Disclosure]

### [Technical Problem]

Various services may be provided through V2X communication. Various services may be provided between a vehicle and an infrastructure or between a vehicle or a vulnerable road user as well as a vehicle to vehicle service. Accordingly, it is important to configure and transmit and receive a V2X message set or a V2X message for providing accurate security related information in each service environment.

### [Technical Solution]

In order to solve the technical problem, the present invention proposes a method and apparatus for V2X communication.

According to an embodiment of the present invention, a method for transmitting a V2I message of a V2X communication apparatus may include generating a V2I message for providing V2I service which is a service between a vehicle and an infra, the V2I message includes a first container including information commonly used for the V2I service and a second container including information used for a specific V2I service; network/transport layer-processing the V2I message; and generating a signal frame by physical layer-processing the V2I message, and the first container includes message ID information representing an identifier of the V2I message.

As an embodiment, the step of network/transport layer-processing may include: generating a WSM message by processing the V2I message based on Wave Short Message Protocol (WSMP).

According to an embodiment of the present invention, a V2X communication apparatus may include an RF unit configured to transmit and receive a radio signal; and a processor configured to control the RF unit, wherein the process is configured to: generate a V2I message for providing V2I service which is a service between a vehicle and an infra, the V2I message includes a first container including information commonly used for the V2I service and a second container including information used for a specific V2I service; network/transport layer-process the V2I message; and generate a signal frame by physical layer-processing the V2I message, and the first container includes message ID information representing an identifier of the V2I message.

As an embodiment, performing of the network/transport layer-processing may include: generating a WSM message by processing the V2I message based on Wave Short Message Protocol (WSMP).

As an embodiment, when the specific V2I service is a service related to work zone safety, the second container may include first worker presence information indicating whether a worker is present in a work zone.

As an embodiment, when the specific V2I service is a service related to work zone safety, the second container may include second worker presence information indicating whether a worker is present for each lane in a work zone.

As an embodiment, the second container may further include worker state information representing a state of a worker for each lane in a work zone.

As an embodiment, the worker state information may provide the number of workers in each lane according to a predefined scheme or a range of the number of workers in each lane as the state of a worker.

As an embodiment, the second container may further include at least one of first heavy equipment presence information indicating whether a heavy equipment is present in a work zone, second worker presence information indicating whether a heavy equipment is present in each lane in the work zone or heavy equipment state information representing a state of a heavy equipment for each lane in the work zone.

### [Technical Effects]

According to the present invention, a V2X apparatus may provide more accurate work zone related information by using a V2I message including worker presence information in a sequence format. In addition, according to the present invention, a V2X apparatus may provide more accurate work zone related information by using a V2I message including worker state information together with worker presence information. In addition, according to the present invention, a V2X apparatus may provide various types of work zone related information by using a V2I message further including information for presence and state of a heavy equipment in a work zone. Through this, a V2X apparatus may provide accurate work zone safety related information to a user.

### [Description of Drawings]

The accompanying drawings, which are included to provide a further understanding of the invention and are incorporated in and constitute a part of this application, illustrate embodiments of the invention and, together with the description, serve to explain the principles of the invention.
FIG. 1 illustrates an exemplary architecture of a V2X communication device according to an embodiment of the present invention.
FIG. 2 illustrates an exemplary architecture of a V2X communication device according to another embodiment of the present invention.
FIG. 3 illustrates an application layer of a V2X communication device according to an embodiment of the present invention.
FIG. 4 illustrates a facilities layer of a V2X communication device according to an embodiment of the present invention.
FIG. 5 illustrates a network/transport layer of a V2X communication device according to an embodiment of the present invention.
FIG. 6 illustrates an access layer of a V2X communication device according to an embodiment of the present invention.
FIG. 7 illustrates a physical layer configuration of a V2X communication device according to an embodiment of the present invention.
FIG. 8 illustrates a V2X communication message set according to an embodiment of the present invention.
FIG. 9 illustrates an example of a message in the V2X communication message set of FIG. 8.
FIG. 10(a) illustrates a method in which a V2X communication device processes a V2X message according to an embodiment of the present invention. FIG. 10(b) illustrates an exemplary structure of a WSM message processed by the processing method of FIG. 10(a), and FIG. 10(c) illustrates an exemplary structure of an LLC packet processed by the processing method of FIG. 10(a).
FIG. 11(a) illustrates a method in which a V2X communication device processes a V2X message according to another embodiment of the present invention. FIG. 11(b) illustrates an exemplary structure of a BTP packet processed by the processing method of FIG. 11(a), and FIG. 11(c) illustrates an exemplary structure of a geonetworking packet processed by the processing method of FIG. 11(a).
FIG. 12 illustrates a structure of a V2I message according to an embodiment of the present invention.
FIG. 13 illustrates a common container of a V2I message according to an embodiment of the present invention.
FIG. 14 illustrates an application container in a V2I message according to an embodiment of the present invention.
FIG. 15 illustrates a method for a V2X apparatus to provide worker related information by using a V2I message according to an embodiment of the present invention.
FIG. 16 illustrates a method of providing a safety warning using a V2I message by a V2X apparatus according to an embodiment of the present invention.
FIG. 17 illustrates an application container in a V2I message according to another embodiment of the present invention.
FIG. 18 illustrates a method of providing worker related information using a V2I message by a V2X apparatus according to an embodiment of the present invention.
FIG. 19 illustrates a method of providing a safety warning using a V2I message by a V2X apparatus according to an embodiment of the present invention.
FIG. 20 illustrates an application container in a V2I message according to another embodiment of the present invention.
FIG. 21 illustrate a display method of the worker state information in the application container of FIG. 20.
FIG. 22 illustrates a method of providing worker related information using a V2I message by a V2X apparatus according to an embodiment of the present invention.
FIG. 23 illustrates a method of providing a safety warning using a V2I message by a V2X apparatus according to an embodiment of the present invention.
FIG. 24 illustrates a method of providing the worker related information using an 120 message or a V2O message by a V2X apparatus according to an embodiment of the present invention.
FIG. 25 illustrates an O2X message according to an embodiment of the present invention.
FIG. 26 illustrates a method of communicating with a peripheral V2X apparatus by a V2X apparatus according to an embodiment of the present invention.
FIG. 27 illustrates an application container in a V2I message according to another embodiment of the present invention.
FIG. 28 illustrate a display method of the heavy equipment state information in the application container of FIG. 27(c).
FIG. 29 illustrates a method of providing heavy equipment related information using a V2I message or a V2V message by a V2X apparatus according to an embodiment of the present invention.
FIG. 30 illustrates a block diagram of a V2X communication apparatus according to an embodiment of the present invention.
FIG. 31 is a flowchart illustrating a method for transmitting a V2I message by a V2X communication apparatus according to an embodiment of the present invention.

### [Best Mode for Invention]

Preferred embodiments of the present invention will be described in detail with reference to the accompanying drawings. The following detailed description with reference to the attached drawings is for the purpose of illustrating preferred embodiments of the present invention rather than illustrating only embodiments that may be implemented according to embodiments of the present invention. The following detailed description includes details in order to provide a thorough understanding of the present invention, but the present invention does not require all of these details. The present invention is not limited to separately use each of embodiments described hereinafter. Multiple embodiments or all of embodiments may be used together, and specific embodiments may be used as a combination.

Most of terms used in the present invention are selected from common ones widely used in the field, but some terms are arbitrarily selected by the applicant and a meaning thereof will be described in detail in the following description, as needed. Accordingly, the present invention should be understood based on an intended meaning of the term rather than a mere name or meaning of the term.

The present invention relates to a V2X communication device, and the V2X communication device may perform communication between a vehicle and a vehicle, a vehicle and an infrastructure, and a vehicle and a bicycle or a mobile device. The V2X communication device may be abbreviated to a V2X device. In an embodiment, the V2X communication device may be correspond to an on board unit (OBU) of a vehicle or may be included in the OBU. The V2X device may be correspond to a Road Side Unit (RSU) of an infrastructure or may be included in the RSU. Alternatively, the V2X communication device may be included in an Intelligent Transport System (ITS) station (or device) to perform all or some functions of the ITS station. Alternatively, the V2X communication device may perform all or some functions of a Wireless Access In Vehicular Environments (WAVE) station implemented using the WAVE station (or device).

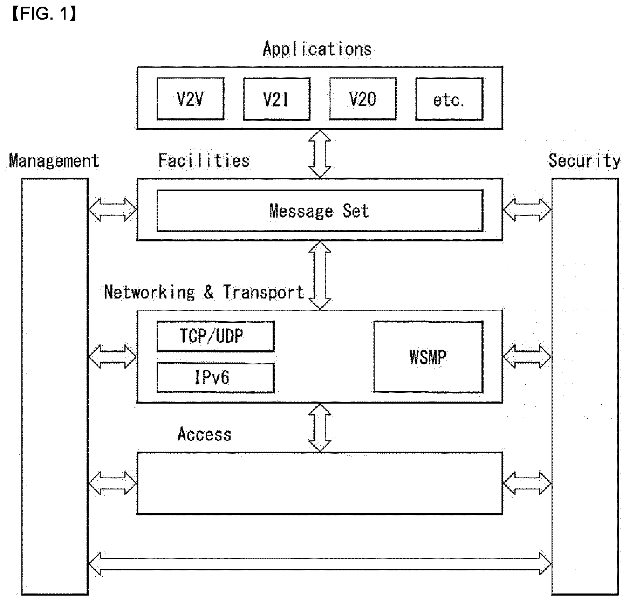

FIG. 1 illustrates an exemplary architecture of a V2X communication device according to an embodiment of the present invention. FIG. 1 may be, for example, an exemplary architecture of a V2X communication device that may be implemented based on a reference architecture of an Intelligent Transport System (ITS) station (or device) according to the United States (US) standard. In an embodiment, the V2X communication device may be included in the ITS station to perform all or some functions of the ITS station. In an embodiment, an ITS station according to the US Standard may be implemented based on a WAVE station according to the IEEE802.11 and IEEE1609 standard.

In architecture of FIG. 1, a communication network between two end vehicles/users/infrastructures may be formed, and such communication may be performed through a function of each layer of the architecture of FIG. 1. For example, when a message is communicated between the infrastructure and the vehicle, in a transmission infrastructure (or vehicle) and a V2X communication device thereof, by passing through each layer downward by one layer, data may be transferred, and in a receiving vehicle (or infrastructure) and a V2X communication device thereof, by passing through each layer upward by one layer, data may be transferred. A description of each layer of an architecture of FIG. 1 is as follows.

Application layer: the application layer may implement and support various use cases or applications. For example, the application layer may provide various applications such as a Vehicle to Vehicle (V2V) application, a Vehicle to Infrastructure (V2I) application, and a Vehicle to others (V2O) application.

Facilities layers: the facilities layer may support to effectively realize various use cases defined in an application layer. In an embodiment, the facilities layer may perform a function of generating a message (or message set) based on information to be transmitted at an application layer, which is an upper layer.

Networking & Transport layer: The networking & transport layer may constitute a network for vehicle communication between homogenous/heterogenous networks by using various transport protocols and network protocols. For example, the networking & transport layer may provide Internet access and routing using an Internet protocol such as TCP/UDP+IPv6. Alternatively, the networking & transport layer may constitute a vehicle network using a Wave Short Message Protocol (WSMP).

Access layer: the access layer may transmit a message/data received from the upper layer through a physical channel. For example, the access layer may perform/support data communication based on IEEE 802.11 and/or 802.11p standard based communication technology, IEEE 1609 and/or IEEE 1609.4 standard based communication technology. The access layer has a characteristic similar or identical to an OSI 1 layer (physical layer) and an OSI 2 layer (data link layer).

An exemplary architecture of the V2X communication device may further include a management layer and a security layer.

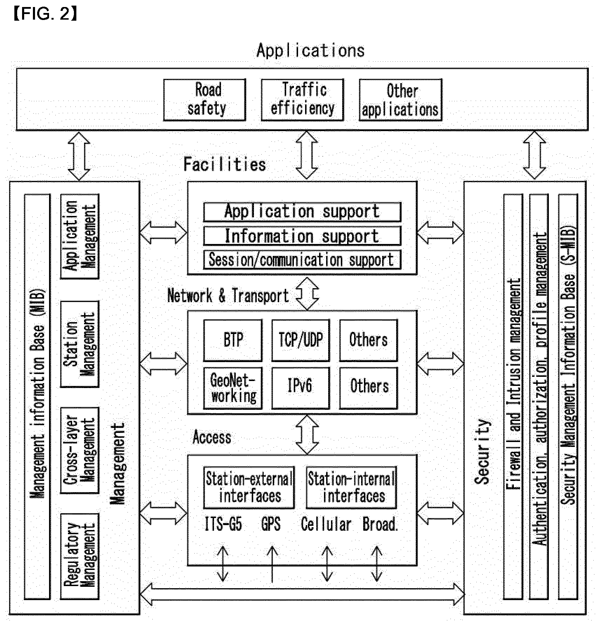

FIG. 2 illustrates an exemplary architecture of a V2X communication device according to another embodiment of the present invention. FIG. 2 may be, for example, an exemplary architecture of a V2X communication device that may be implemented based on a reference architecture of an Intelligent Transport System (ITS) station (or device) according to the EU standard. In an embodiment, the V2X communication device may be included in the ITS station to perform all or some functions of the ITS station. Each layer of the architecture of FIG. 2 may have the same characteristics as or characteristics similar to each layer of a corresponding architecture of FIG. 1.

In the architecture of FIG. 2, as in the architecture of FIG. 1, communication between two end vehicles/users/communication infrastructures may be performed through functions of each layer of the architecture of FIG. 2. For example, when a message between vehicles is communicated, in a transmitting vehicle and a V2X communication device thereof, by passing through each layer downward by one layer, data may be transferred, and in a receiving vehicle and a V2X communication device thereof, by passing through each layer upward by one layer, data may be transferred. A description of each layer of the architecture of FIG. 2 is as follows.

Application layer: the application layer of FIG. 2 may have the same characteristics as or characteristics similar to those of the application layer of FIG. 1. For example, the application layer may implement and support various use cases as in provision of road safety, efficient traffic information, and other application information.

Facilities layers: the facilities layer of FIG. 2 may have the same characteristics as or characteristics similar to those of the facilities layer of FIG. 1. For example, the facilities layer may perform application support, information support, and session/communication support to support to effectively realize various use cases defined at the application layer.

Networking & Transport layer: the networking & transport layer of FIG. 2 may have the same characteristics or characteristics similar to those of the networking & transport layer of FIG. 1. For example, the networking & transport layer may provide Internet access and routing using an Internet protocol such as TCP/UDP+IPv6 to constitute a network for vehicle communication. Alternatively, the networking & transport layer may constitute a vehicle network using a geographical position based protocol such as Basic Transport Protocol (BTP)/Geonetworking.

Access layer: the access layer of FIG. 2 may have the same characteristics as or characteristics similar to those of the access layer of FIG. 1. For example, the access layer may perform/support data communication based on IEEE 802.11 and/or 802.11p standard based communication technology, ITS-G5 wireless communication technology based on IEEE 802.11 and/or 802.11p standard physical transmission technology, 2G/3G/4G(LTE)/5G wireless cellular communication technology including satellite/broadband wireless mobile communication, broadband terrestrial digital broadcasting technology such as DVB-T/T2/ATSC, GPS technology, and IEEE 1609 WAVE technology.

An exemplary architecture of the V2X communication device of FIG. 2 may further include a management layer and a security layer, as in the exemplary architecture of the V2X communication device of FIG. 1.

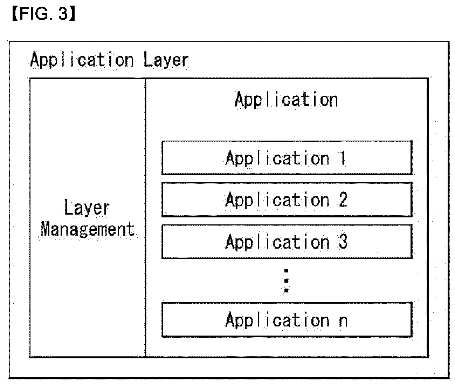

FIG. 3 illustrates an application layer of a V2X communication device according to an embodiment of the present invention. FIG. 3 illustrates in detail an application layer of the V2X communication device of FIG. 1 or an application layer of the V2X communication device of FIG. 2.

The application layer classifies and defines an application and provides a service to an end vehicle/user/infrastructure through a facilities layer, a networking & transport layer, and an access layer, which are lower layers. In this case, the application may be classified and defined for each use case.

For example, the application may be classified and defined into a V2V application, a V2I application, a V2O application, and an 120 application. The V2V application is an application that provides a V2V service such as a vehicle security service and a driving support service using V2V technology, which is communication technology between vehicles. The V2I application is an application that provides a V2I service such as a vehicle safety service and a traffic information service using V2I technology, which is communication technology between a vehicle and an infrastructure. Here, the infrastructure may be a safety facility at a periphery of a road such as traffic light and street light. The V2O application is an application that provides a V2O service such as a vehicle safety service and a vulnerable road user protection service using V2O technology, which is communication technology between a vehicle and others. Here, other mean things, except for the vehicle and the infrastructure and may be, for example, a vulnerable road user such as a pedestrian. The 120 application is an application that provides an 120 service such as a vehicle safety service and a vulnerable road user protection service using 120 technology, which is communication technology between an infrastructure and others.

In another example, the application may be classified and defined into other applications such as a road-safety application, a traffic efficiency application, a local services application, and infotainment.

The aforementioned classification of the application is only an illustration, and the scope of the present invention is not limited to such classification. Further, such application classification and use case may be newly updated when a new application scenario occurs.

Layer Management performs a function of managing and servicing information related to an operation and security of an application layer, information and services are transferred and shared in two-way through an interface between management entity and application layer (MA) and an interface between security entity and applications (SA) (or SAP: Service Access Point, e.g., MA-SAP, SA-SAP). A request from the application layer to the facilities layer or information transfer from the facilities layer to the application layer is performed through an interface between facilities layer and ITS-S applications (FA) (or FA-SAP).

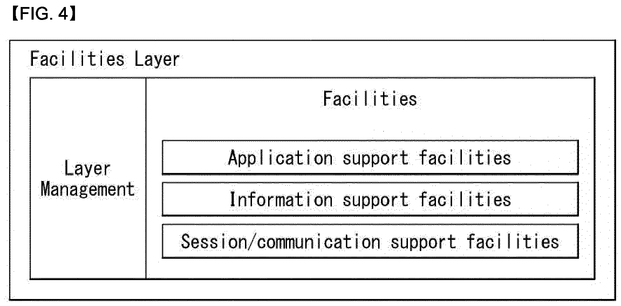

FIG. 4 illustrates a facilities layer of a V2X communication device according to an embodiment of the present invention. FIG. 4 illustrates in more detail a facilities layer of the V2X communication device of FIG. 1 or a facilities layer of the V2X communication device of FIG. 2. The facilities layer of FIG. 4 has the same characteristics as and characteristics similar to those of an OSI 5 layer (session layer), an OSI 6 layer (presentation layer), and an OSI 7 layer (application layer). That is, the facilities layer basically supports the same function as or a function similar to that of three upper layers of an OSI model.

Further, the facilities layer additionally provides a facility for only the V2X communication device. For example, the facilities layer may provide a facility such as application support, information support, and session/communication support. Here, the facility means a component that provides functionality, information, and data.

A description of three exemplary suggested facilities is as follows.

An application support facility means a facility that supports a basic application set (or message set). In the V2X communication device of FIG. 1, the facilities layer may support, for example, a message such as a Wave short message (WSM). In the case of the V2X communication device FIG. 2, the facilities layer may support, for example, a periodic message such as Co-operative Awareness Messages (CAM) or an event message such as Decentralized Environmental Notification Messages (DENM).

The information support facility is a facility that provides common data information or database to be used for a basic application set (or message set) and may be, for example, a local dynamic map (LDM).

The session/communication support facility is a facility that provides a service for communication and session management and may be an addressing mode and session support.

Layer Management performs a function of managing and servicing information related to an operation and security of the facilities layer. Information and services are transferred and shared in two-way through an interface between management entity and facilities layer (MF) and an interface between security entity and facilities layer (SF) (or MF-SAP, SF-SAP). A request from the application layer to the facilities layer or information transfer from the facilities layer to the application layer is performed through FA (or FA-SAP), and two-way information and service transfer between the facilities layer and the networking & transport layer, which is a lower layer is performed by an interface between networking & transport layer and facilities layer (NF) (or NF-SAP).

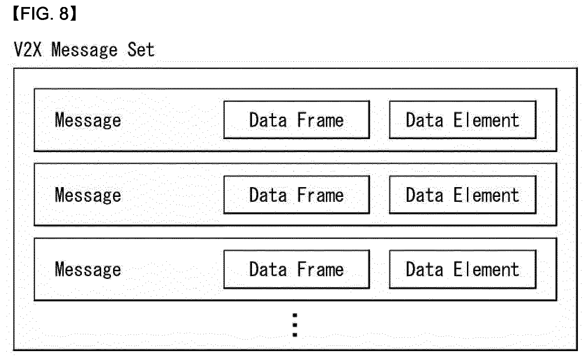

As described above, the facilities layer performs support of an application set (or message) as one of major functions. That is, the facilities layer performs a function of generating a message set (or message) based on information to be transmitted or a service to be provided by the application layer. The generated message may be referred to as a V2X message and will be described in detail below with reference to FIG. 8.

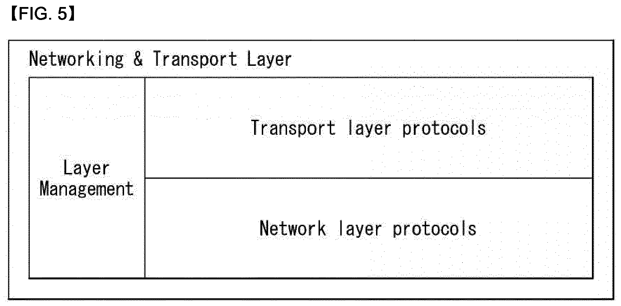

FIG. 5 illustrates a networking & transport layer of a V2X communication device according to an embodiment of the present invention. FIG. 5 illustrates in more detail a networking & transport layer of the V2X communication device of FIG. 1 and a networking & transport layer of the V2X communication device of FIG. 2. The networking & transport layer of FIG. 5 has the same characteristics as or characteristics similar to those of an OSI 3 layer (network layer) and an OSI 4 layer (transport layer).

The transport layer is a connection layer between services provided by an upper layer and a lower layer and performs a function of managing data transmitted by a user to accurately arrive at a destination. That is, the transport layer mainly performs a function of dividing data into a packet of an appropriate size to transmit for efficient data transmission at the transmission side and a function of recombining each packet of the received packets to an original file at the receiving side.

In the case of the V2X communication device of FIG. 1, for example, a TCP and a UDP used in an existing Internet network may be used as a transport protocol. In the case of the V2X communication device FIG. 2, for example, a BTP protocol for an ITS station or a TCP and a UDP used in an existing Internet network may be used as a transport protocol.

The network layer is responsible for a logical address, determines a transfer path of a packet, and performs a function of receiving a packet generated in the transport layer to add a logical address of a destination to a header of the network layer. As an example of packet route setting, unicast and broadcast between vehicles, between a vehicle and a fixed station, or between fixed stations may be considered.

In the case of the V2X communication device of FIG. 1, for example, an IP protocol (e.g., IPv6) used in the existing Internet network may be used as a network protocol. In the case of the V2X communication device of FIG. 2, for example, GeoNetworking for an ITS station, and an IP protocol (IPv6 networking with mobility support, IPv6 over GeoNetworking) used in the existing Internet network may be used as a network protocol.

In the above embodiment, the networking & transport layer provides a function of each of a network layer and a transport layer using a separate network protocol and transport layer, but the networking & transport layer may provide a function of a network layer and a transport layer using a single protocol. For example, in the case of the V2X communication device of FIG. 1, the networking & transport layer may provide a function of a networking & transport layer using a Wave Short Message Protocol (WSMP) protocol for a WAVE station. Here, the WSMP protocol is a networking & transport protocol for transmitting a WAVE Short Message (WSM) generated in a facilities layer of a WAVE system to a lower layer.

Layer management performs a function of managing and servicing information related to an operation and security of the networking & transport layer. Information and services are transferred and shared in two-way through an interface between management entity and networking & transport layer (MN) (or MN-SAP) and an interface between security entity and networking & transport layer (SN) (or SN-SAP). Two-way information and service transfer between the facilities layer and the networking & transport layer is performed by an NF (or NF-SAP), and information exchange between the networking & transport layer and the access layer is performed by an interface between access layer and networking & transport layer (IN) (or IN-SAP).

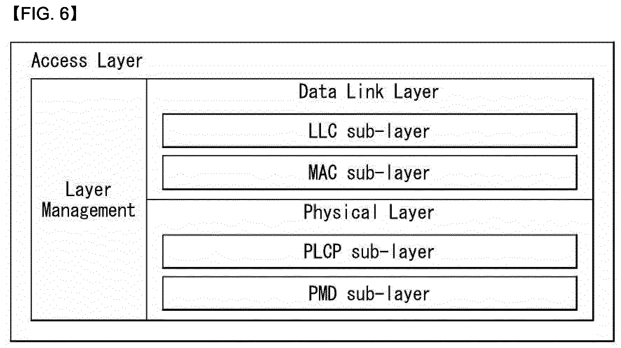

FIG. 6 illustrates an access layer of a V2X communication device according to an embodiment of the present invention.

FIG. 6 illustrates in more detail an access layer of the V2X communication device of FIG. 1 or an access layer of the V2X communication device of FIG. 2. The access layer of FIG. 3 may include a data link layer, a physical layer, and layer management. The access layer of FIG. 3 has the same characteristics as or characteristics similar to those of an OSI 1 layer (physical layer) and an OSI 2 layer (data link layer).

The data link layer may include a Logical Link Control (LLC) sub-layer, a Medium Access Control (MAC) sub-layer, and a Multi-channel operation (MCO) sub-layer. The physical layer may include a Physical Layer Convergence Protocol (PLCP) sub-layer and a Physical Medium Access (PMD) sub-layer.

The data link layer may convert a physical line between adjacent nodes (or between vehicles) having noise into a communication channel having no transmission error so that an upper network layer may use the physical line. The data link layer performs a function of transmitting/transporting/transferring a 3-layer protocol, a framing function of dividing and grouping data to transmit into a packet (or frame) as a transmission unit, a flow control function of compensating a speed difference between the sending side and the receiving side, and a function of detecting and modifying or retransmitting a transmission error. Further, in order to avoid from erroneously confusing packets or ACK signals, the data link layer performs a function of giving a sequence number to the packet and the ACK signal and a function of controlling setup, maintenance, and short-circuit of a data link between network entities and data transmission. Furthermore, such data link layer may include a logical link control (LLC) sub-layer and a medium access control (MAC) sub-layer based on the IEEE 802 standard.

A main function of the LLC sub-layer is to allow communication unrelated to topology of a network by enabling to use several different lower MAC sub-layer protocols.

The MAC sub-layer may control collision/contention occurrence between vehicles when several vehicles (or nodes or vehicles and peripheral devices) use a shared medium. The MAC sub-layer may format packets transferred from an upper layer to correspond to a frame format of a physical network. The MAC sub-layer may perform addition and identification functions of a sender address/recipient address, carrier detection, collision detection, and fault detection on a physical medium.

The physical layer: the physical layer may define an interface between a node and a transmission medium to a lowest layer on an ITS layer structure and perform modulation, coding, and mapping of a transmission channel to a physical channel for bit transmission between data link layer entities. Further, the physical layer performs a function of notifying (busy or idle) whether a wireless medium is being used through carrier sense and clear channel assessment (CCA) to a MAC sub-layer. Furthermore, such a physical layer may include a physical layer convergence protocol (PLCP) sub-layer and a physical medium access (PMD) sub-layer based on the IEEE standards.

The PLCP sub-layer performs a function of connecting an MAC sub-layer and a data frame. The PLCP sub-layer adds a header to reception data to enable the MAC sub-layer to operate regardless of a physical characteristic. Therefore, the PLCP frame may define differently a format thereof according to several different wireless LAN physical layer standards.

A main function of the PMD sub-layer may perform carrier modulation or RF modulation of a frame received from the PLCP sub-layer and then transmit the frame to the wireless medium according to transmission and reception related standards.

Layer management performs a function of managing and servicing information related to an operation and security of an access layer. Information and services are transferred and shared in two-way through an interface between management entity and access layer (MI) (or MI-SAP) and an interface between security entity and access layer (SI) (or SI-SAP). Two-way information and service transfer between the access layer and the networking & transport layer is performed by an IN (or IN-SAP).

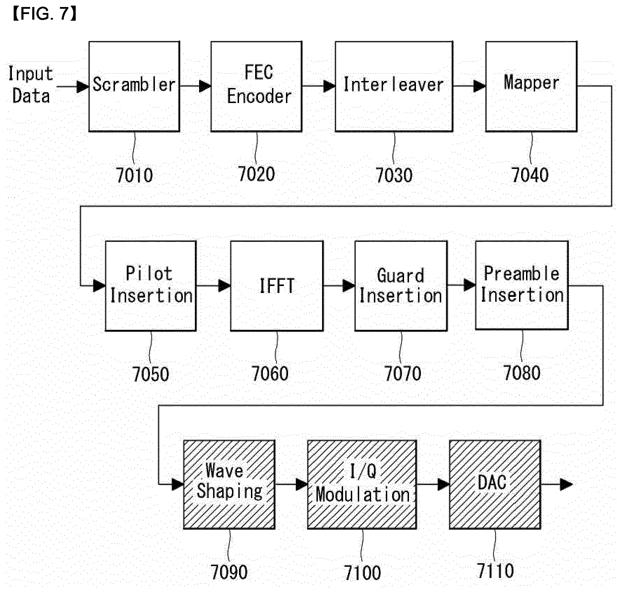

FIG. 7 illustrates a physical layer configuration of a V2X communication device according to an embodiment of the present invention.

In an embodiment, FIG. 7 is a block diagram illustrating physical layer signal processing of the IEEE 802.11 or ITS-G5. However, FIG. 7 illustrates a physical layer configuration according to an embodiment of the present invention, and the physical layer configuration is not limited only to the above-described transmission standard technology.

A physical layer processor of FIG. 7 may include a Physical Layer Convergence Protocol (PLCP) sub-layer baseband signal processing part including at least one of a scrambler 7010, an FEC encoder 7020, an interleaver 7030, a mapper 7040, a pilot insertion 7050, an IFFT 7060, a guard insertion 7070, and a preamble insertion 7080 and a Physical Medimu Dependant (PMD) sub-layer RF band signal processing part including at least one of a wave shaping 7090, an I/Q modulation 7100, and a DAC 7110. A function description of each block is as follows.

The scrambler 7010 may perform an XOR operation of input bit stream with a Pseudo Random Binary Sequence (PRBS) to randomize the input bit stream. The FEC encoder 5020 may add redundancy to transmission data so that the reception side corrects an error on a transmission channel. In order to correspond to a burst error, the interleaver 7030 may interleave input data/bit string based on the interleaving rule. In an embodiment, when deep fading or erasure is applied to a QAM symbol, interleaved bits are mapped to each QAM symbol and thus an error may be prevented from occurring in continuous bits of the entire code word bits. The mapper 7040 may allocate the inputted bit word to single constellation. The pilot insertion 7050 inserts a reference signal into a predetermined position of a signal block. When using such a reference signal, the receiver may estimate a channel distortion phenomenon such as channel estimation, frequency offset, and timing offset.

The IFFT 7060, i.e., the inverse waveform transform block may convert an input signal so that transmission efficiency and flexibility is enhanced in consideration of a system structure and characteristics of a transmission channel. In an embodiment, in the case of the OFDM system, the IFFT 7060 may convert a signal of a frequency domain to a signal of a time domain using an inverse FFT operation. The IFFT 7060 may not be used or omitted in the case of a single carrier system. In order to minimize an influence of delay spread of a transmission channel, the guard insertion 7070 may insert a guard interval between adjacent signal blocks. In an embodiment, in the case of the OFDM system, the guard insertion 7070 may insert a cyclic prefix into a guard interval segment. In order to enable a receiver to quickly and efficiently detect a target signal, the preamble insertion 7080 may insert a signal of the determined type, i.e., a preamble into a transmission signal during a transmission and reception period. In the embodiment, in the OFDM system, the preamble insertion 7080 may define a signal block/signal frame including a plurality of OFDM symbols and insert a preamble symbol into a start portion of the signal block/signal frame.

The wave shaping 7090 may perform waveform processing of an input baseband signal based on channel transmission characteristics. In an embodiment, in order to obtain a reference of out-of-band emission of a transmitted signal, the waveform shaping 7090 may perform square-root-raised cosine (SRRC) filtering. In the case of a multi-carrier system, the waveform shaping 5090 may not be used or omitted. The I/Q modulator 7100 may perform in-phase and quadrature modulation. The Digital to Analog Converter (DAC) 7110 may convert and output an input digital signal to an analog signal. An output analog signal may be transmitted through an output antenna.

Each of the blocks illustrated and described in FIG. 7 may be omitted or replaced by another block having a similar or identical function. Blocks of FIG. 7 may be configured with all or some combinations, as needed.

FIG. 8 illustrates a V2X communication message set according to an embodiment of the present invention. The message set of the embodiment of FIG. 8 may be a message set generated in the facility layer of the above-described V2X device. In this specification, the message set may be referred to as a V2X message set or an application set.

As shown in FIG. 8, the message set (or V2X message set) may include at least one message (or V2X message). In an embodiment, each message may be configured with a data frame and/or a data element. The concept of each thereof is described as follows.

Message set: the message set is a collection of messages related to an operation of the V2X device. For example, the V2X message set may be a collection of messages such as a message defined in the Society of Automotive Engineers (SAE) J2735 standard, for example, a BasicSafetyMessage (BSM), a RoadSideAlert, and a PersonalSafetyMessage.

The message: the message is a set of data elements and data frames that may be transmitted in a single unit between the V2X devices. For example, the V2X message may be a BSM message in a message set defined in the J2735 standard. In another example, the V2X message may be Co-operative Awareness Messages (CAM) or Decentralized Environmental Notification Messages (DENM) defined in the ETSI EN-302-637 Standard.

Data frame: the data frame is one of message configurations and refers to an array of at least two data. In an embodiment, the data frame may be a list of data elements and/or a list of a data frame. For example, the data frame may be BSMcoreData representing core data always included in the above BSM message. The BSM core data may be represented with a list of data elements.

Data element: the data element is one of message configurations and represents an expression of single information. That is, the data element provides a description of interested information of a minimum unit. For example, the data element may be speed data representing a speed of a vehicle in the above-mentioned core data. The data element is regarded as an indivisible element. In other words, the data elements cannot be a list of other data elements or data frames.

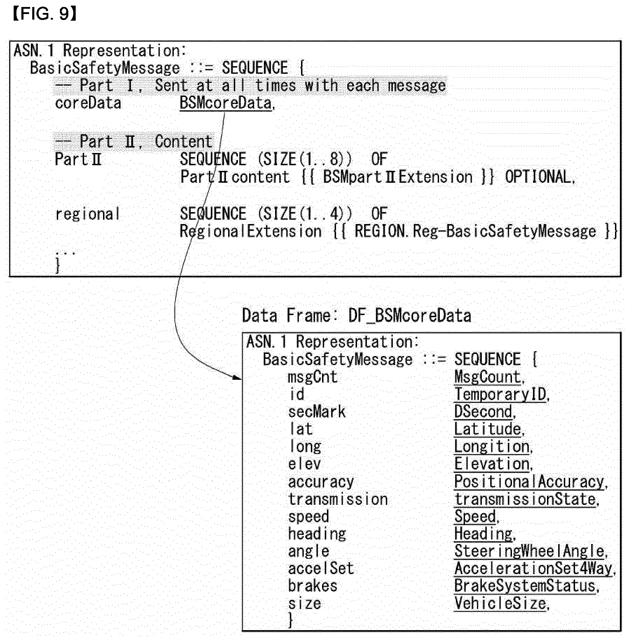

In an embodiment, a V2X message or a message set including the same may be represented based on an Abstract Syntax Notation One (ASN.1) method. The ASN.1 method is used for describing a data structure and also specifies encoding/decoding rule of data. The ASN.1 method corresponds to the Consultative Committee on International Telegraphy and Telephony X.208 (CCITT) and international Organization for Standardization (ISO 8824) common standard. The ASN.1 method has a characteristic that is not dependent on a specific device, a data representation method, a programming language, and a hardware platform. That is, ASN.1 corresponds to a language for describing data regardless of a platform. Therefore, when the V2X message is represented based on ASN.1, V2X devices operating different platforms have the advantage that communication of a V2X message is available. Hereinafter, an example of the V2X message described with the ASN.1 method will be described with reference to FIG. 9.

FIG. 9 illustrates an example of a message in the V2X communication message set of FIG. 8. In particular, FIG. 9 illustrates an example of a V2X message in a V2X message set. In the embodiment of FIG. 9, the V2X message may be a vehicle safety related message, for example, a BSM message defined in the SAE J2735 standard. The BSM message is a most basically used message of messages defined in the SAE J2735 standard and is a message that provides vehicle safety related information. Such a BSM message may be used in various applications for exchanging security data related to a vehicle status. In this specification, the BSM message may be referred to as a safety message or a vehicle safety message.

As shown in FIG. 9, the BSM message may be represented based on an Abstract Syntax Notation One (ASN.1) method. Further, the BSM message may be configured with at least one data part (or data container). For example, the BSM message may include a first data part and/or a second data part. The first data part indicates a part (or container) including core data always transmitted in all BSM messages, and the second data part indicates a part (or container) including data optionally included in the BSM message. In this specification, the first data part may be referred to as a first part, a main part, a common part, and a core part. Further, the second data part may be referred to as a second part, a sub-part, a specific part, and a non-core part.

In an embodiment, a core data included in the first data part is a data frame and may be configured with a plurality of data elements such as a plurality of data IDs, latitudes (lat), longitudes (long), speeds, and sizes. Thereby, basic information of a vehicle such as ID, latitude, longitude, speed, and a size of the vehicle may be provided. In an embodiment, in order to periodically provide basic information of the vehicle to a peripheral device, the V2X device may periodically transmit (or broadcast) a BSM message. For example, the V2X device may transmit the BSM message in a cycle of 100msec, i.e., a cycle of 10 times per second.

The above BSM message is mainly used as a V2V message for providing vehicle safety related information between vehicles, but the present invention is not limited thereto and may be used as, for example, a V2I message or a V2O message for providing vehicle safety related information between a vehicle and an infrastructure or between a vehicle and others. Further, in the above embodiments, only a message structure and characteristics of the BSM message have been described, but the same description as or a description similar thereto may be applied to other V2X messages. For example, the V2I message may have the same structure as the message structure of the above-described BSM message. For example, the V2I message may include the first data part (or container) and the second data part (or container).

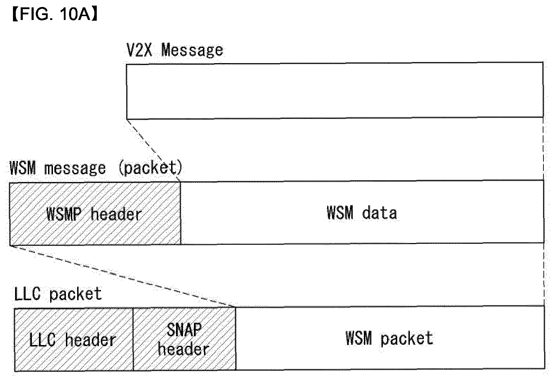

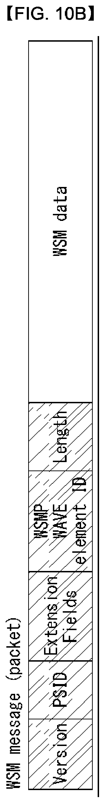

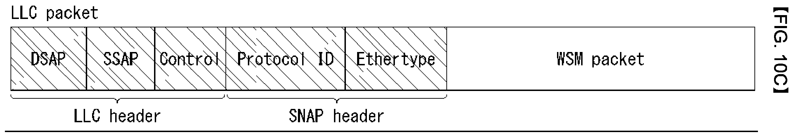

FIG. 10(a) illustrates a method in which a V2X communication device processes a V2X message according to an embodiment of the present invention. In particular, the embodiment of FIG. 10(a) illustrates a method in which the V2X communication device of FIG. 1 processes a V2X message for transmission and reception of a V2X message. Further, FIG. 10(b) illustrates an exemplary structure of a WSM message processed by the processing method of FIG. 10(a), and FIG. 10(c) illustrates an exemplary structure of an LLC packet processed by the processing method of FIG. 10(a).

The V2X communication device may generate a V2X message (or V2X message set) through facility layer processing. In an embodiment, the V2X communication device may generate a V2X message through facility layer processing based on information (or upper layer information) received from the application layer. In this case, the V2X communication device may generate a V2X message of a predefined format. For example, the V2X communication device may generate a V2X message using a message dictionary defined in the SAE J2735 standard. In this case, the generated V2X message may have, for example, a message format of FIG. 9. As described above, the V2X messages may include a V2V message for communication between vehicles, a V2I message for communication between a vehicle and an infrastructure, and/or a V2O message for communication between a vehicle and others.

Next, the V2X communication device may perform network/transport layer processing of a V2X message. In an embodiment, the V2X communication device may process a V2X message based on a WSMP protocol to generate a WSM message (or packet). The WSM message generated in this way may include a data part and a header part (or WSMP header) including a V2X message, as shown in FIG. 10(a). In this specification, data included in the data part of the WSM message may be referred to as WSM data. Further, a header of the WSM message may be referred to as a WSMP header. Further, the WSM message may be referred to as a WSMP packet or a WSM packet.

Referring to FIG. 10(b), the header part of the WSM message may include a version field, a Provider Service Identifier (PSID) field, an expansion field, a WSMP WAVE Element ID field and/or a length field. A description of each field is as follows.

The version field represents a version of the WSM protocol (WSMP). In an embodiment, the version field may be a field of 1 byte, 4 bits may be reserved for future use, and the remaining 4 bits may be used for representing a version of the WSMP.

The PSID field represents a provider service identifier (PSID) value used for determining an appropriate upper layer destination of the WSM message. In an embodiment, the PSID field may be a 4-byte field.

The extension field is a field for extension of the WSMP header and may be used for representing, for example, a channel number, a data rate, and transmit power used.

The WSMP WAVE Element ID field represents a type of the WSM message. In an embodiment, the WSMP WAVE Element ID field may be a field of 1 byte.

The length field represents a length of a WSM message. In an embodiment, the length field may be a field of 2 bytes, and 4 bits may be reserved for future use, and the remaining 12 bits may be used for representing a length of WSM data.

Next, the V2X communication device may perform LLC layer processing of a V2X message. In an embodiment, the V2X communication device processes a WSM message (or WSM packet) based on an LLC layer protocol to generate an LLC packet. The LLC packet generated in this way may include a data part and a header part including a WSM packet, as shown in FIG. 10(a). In an embodiment, the header part of the LLC packet may include an LLC header and/or a Subnetwork Access Protocol (SNAP) header. In an embodiment, the SNAP header may be an optional header. In this specification, an entire header including an LLC header and an SNAP header may be referred to as an LLC packet header.

Referring to FIG. 10(c), the LLC header may include a Destination SAP (DSAP) field, a Source SAP (SSAP) field and/or a control field. Further, the SNAP header may include a protocol ID field and/or an Ethertype field. A description of each field is as follows.

The DSAP field provides information on a SAP of a destination, and the SSAP provides information on a SAP of a source. In an embodiment, the DSAP field and the SSAP field each are a field of 1 byte and may be used as a value for distinguishing an upper layer protocol.

Because the DSAP field and the SSAP field each have a length of 1 byte, it is difficult to distinguish a large number of upper layer protocols with only the two fields. Therefore, an SNAP header may further be used as additional information. When an SNAP header is included in an LLC packet header, a value of the DSAP field and the SSAP field may be set to a specific first value (0xAA). In this case, a first value of the DSAP field and the SSAP field indicates that the SNAP field is used.

The control field is a field of 1 byte and represents a type of an LLC packet.

The protocol ID field is a field of 3 bytes and represents an ID of an upper layer protocol. An Ethertype field is a field of 2 bytes and represents a type of an upper layer protocol. Such a protocol ID field and Ethertype field may be used for distinguishing an upper layer protocol.

In an embodiment, an Ethertype field within an SNAP header may provide information for distinguishing IP data and WSMP data.

At the transmitter side, the V2X communication device may set an Ethertype field to a first value (e.g., 0x88DD) and send down an IP packet to an IP data path when transmitting IP data including a V2X message. Alternatively, when transmitting WSMP data including a V2X message, the V2X communication device may set an Ethertype field to a second value (e.g., 0x86DC) different from a first value and send down a WSM packet to a WSMP path. Thereby, the V2X communication device may divide and transmit IP data and WSMP data. Here, the IP path means a path according to an UPT (or TCP)/IP protocol, and the WSMP path means a path according to a WSMP protocol.

At the receiver side, the V2X communication device parses an LLC packet to determine a value of the Ethertype field, and when a value of the Ethertype field is a first value, the V2X communication device may send up an IP packet to an IP packet path, and when a value of the Ethertype field is a second value, the V2X communication device may send up a WSM packet to a WSMP path.

Next, the V2X communication device may perform MAC layer processing of a V2X message. In an embodiment, the V2X communication device may process an LLC packet based on the MAC layer protocol to generate an MAC packet. The generated MAC packet (or MAC protocol data unit (PDU)) may include an MAC header part, an MAC trailer part and/or a data part (or MAC service data unit (SDU)). In an embodiment, the MAC trailer part may include a frame check sequence (FCS) field.

Next, the V2X communication device may perform physical layer processing of a V2X message. In an embodiment, the V2X communication device may process an MAC packet based on a physical layer protocol to generate a signal frame. Further, the V2X communication device may transmit a communication signal including a signal frame. Thereby, the V2X message may be transmitted to the V2X communication device of the receiver side. Such physical layer processing is the same as that described with reference to FIG. 7. In this specification, the signal frame may be referred to as a message frame or a V2X message frame.

The V2X communication device of the receiver side may perform a reverse process of the above-described process to obtain a V2X message. The V2X communication device may receive a communication signal including a signal frame. The V2X communication device may parse a signal frame through physical layer parsing to obtain an MAC packet, obtain an LLC packet through MAC layer parsing, obtain a WSM packet or an IP packet through LLC layer parsing, and obtain a V2X message through network/transport layer parsing. The V2X communication device of the receiver side may provide an application service using the obtained V2X message.

In the above-described embodiment, in an embodiment in which a V2X message of a WSM message format is generated and is processed based on the WSM protocol, i.e., is processed in a WSMP data path, a processing process of the V2X message has been described, but the scope of the present invention is not limited to the above-described embodiment. For example, a V2X message of an IP data format may be generated, and in this case, the V2X message may be processed according to an IP data path.

Further, in the above embodiment, an embodiment has been described in which the V2X communication device processes a single message for transmission and reception of a message unit, but the same description or a similar description may be applied to an embodiment of processing a message set for transmission and reception of a message set unit. The above-described processing process of the V2X message may be performed by at least one processor included in the V2X communication device.

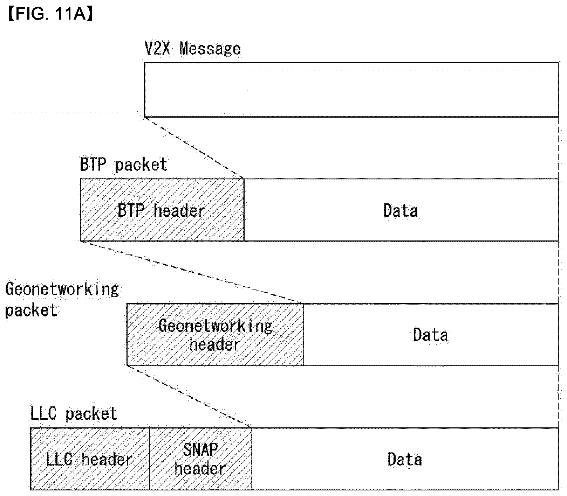

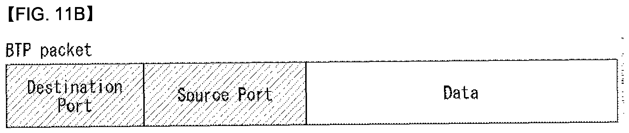

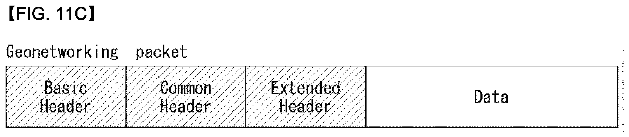

FIG. 11 illustrates a method in which a V2X communication device processes a V2X message according to another embodiment of the present invention. In particular, an embodiment of FIG. 11(b) illustrates a method in which the V2X communication device of FIG. 2 processes a V2X message for transmission and reception of a V2X message. Further, FIG. 11(b) illustrates an exemplary structure of a BTP packet processed by the processing method of FIG. 11(a), and FIG. 11(c) illustrates an exemplary structure of a geonetworking packet processed by the processing method of FIG. 11(a). As described above, each layer of the V2X communication device of FIG. 2 may perform the same function as or a function similar to that of each layer corresponding to the V2X communication device of FIG. 1. Therefore, in FIG. 11, a description corresponding to that of the embodiment of FIG. 10 is omitted.

The V2X communication device may generate a V2X message (or V2X message set) through facility layer processing. In this case, the V2X communication device may generate a V2X message of a predefined format. The generated V2X messages may have a periodic message format such as Co-operative Awareness Messages (CAM) or an event message format such as Decentralized Environmental Notification Messages (DENM). Here, the event message indicates a message triggered by detection of an event to be transmitted.

Next, the V2X communication device may perform network/transport layer processing of a V2X message. First, the V2X communication device may process a V2X message based on a BTP protocol to generate a BTP packet. The generated BTP packet may include a data part and a header part including a V2X message, as shown in FIG. 11(a).

Referring to FIG. 11(b), the header part of the BTP packet may include a destination port field and/or a transmission position port field. A description of each field is as follows.

The destination port field indicates a port of a protocol entity in a facility layer of a destination of a BTP packet. The transmission position port field (or source port field) indicates a port of a protocol entity in a facility layer of a source of a BTP packet.

Next, the V2X communication device may process a V2X message based on a geonetworking protocol to generate a geonetworking packet. The generated geonetworking packet may include a data part and/or a header part including a V2X message, as shown in FIG. 11(a). In this specification, the header part of the geonetworking packet may be referred to as a geonetworking header.

Referring to FIG. 11(c), the header part of the geonetworking packet may include a basic header, a common header and/or an extension header. In an embodiment, the extension header may be an optional header.

In an embodiment, the basic header may include a version field, a next header (NH) field, a life time (LT) field, and/or a reserved field.

The version field is a field of 4 bits and represents a version of a geonetworking protocol. The NH field is a field of 4 bits and represents a type of a header located immediately after the basic header. The LT field is a field of 1 byte and represents a maximum tolerable time that may be buffered until a geonetworking packet arrives at a destination. The reserved field is a field of 1 byte and is a field reserved for future use.

In an embodiment, the common header may include a NH field, a header type (HT) field, a header sub-type (HST) field, a traffic class (TC) field, a flags field, a payload length (PL) field, a maximum hop limit (MHL) field and/or a reserved field.

The NH field is a field of 4 bits and represents a type of a header located immediately after the geonetworking header. The HT field is a field of 4 bits and represents a type of a geonetworking header. The HST field is a field of 4 bits and represents a sub-type of the geonetworking header. The TC field represents a traffic class representing facility layer requirement for packet transmission. The flag field is a field of 1 byte, and a 0th bit indicates whether an ITS station (or V2X communication device) is mobile or stationary, and bits from a first bit to a seventh bit may be reserved for future use. The PL field is a field of 2 bytes and represents a length of a data part (or payload) of the geonetworking packet. The MHL field is a field of 1 byte and represents the maximum hop limit. The reserved field is a field of 1 byte and is a field reserved for future use. In an embodiment, the extension header is an optional header and may include at least one additional field according to a geonetworking mode. The geonetworking mode may include, for example, a broadcasting mode, an anycasting mode, and a unicasting mode. In an embodiment, an extension header of a geonetworking packet transmitted in a unicasting mode may include a sequence number (SN) field, a source position vector (SO PV) field, a destination position vector (DE PV) field and/or a reserved field.

The SN field represents an index of the geonetworking packet. In an embodiment, the SN field may be used for detecting a duplicate geonetworking packet. The SO PV field represents a long position vector including a reference position of a source. The DE PV field represents a shot position vector including a position of a destination.

Next, the V2X device may perform LLC layer processing, MAC layer processing, and physical layer processing of a V2X message. Further, the V2X communication device of the receiver side may perform reverse processes of the above-described process to obtain a V2X message. This is described with reference to FIG. 10 and therefore a detailed description thereof is omitted.

In the above embodiment, in an embodiment in which a V2X message of a CAM message or DENM message format is generated and is processed based on a BTP protocol and a geonetworking protocol, i.e., is processed in a BTP/geonetworking data path, a processing process of a V2X message has been described, but the scope of the present invention is not limited to the above-described embodiment. For example, a V2X message of an IP data format may be generated, and in this case, the V2X message may be processed according to an IP data path.

Further, in the above embodiment, an embodiment has been described in which the V2X communication device processes a single message for transmission and reception of a message unit, but the same or similar description may be applied to an embodiment of processing a message set for transmission and reception of a message set unit. The above-described processing process of the V2X message may be performed by at least one processor included in the V2X communication device.

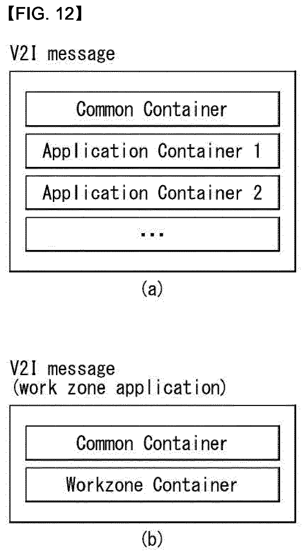

FIG. 12 illustrates a structure of a V2I message according to an embodiment of the present invention. FIG. 12(a) illustrates a concept structure of a V2I message according to an embodiment of the present invention, and FIG. 12(b) illustrates a specific example of a V2I message according to an embodiment of the present invention.

The V2I message refers to as a V2X message for a V2I application (or V2I service). That is, the V2I message may be a V2X message for communication or a service between a vehicle and an infrastructure. For example, as shown in FIG. 12(b), the V2I message may be a message for a V2I application providing a work zone safety related service. In this specification, the work zone safety related service may be a service that provides information related to safety of a work zone, for example, information on a position of a work zone, information on a position and length of a work segment, information on a position and number of an worker in a work zone, and information on a position and number of a heavy equipment in a work zone.

Referring to FIG. 12(a), the V2I message may include a common container and/or at least one application container.

The common container refers to a container including information (or data) commonly used in a V2I application. That is, the common container may be a container including information commonly used in order to provide a V2I service. In an embodiment, the common container may include common information (or core information) for a V2I application, for example, ID related information, event related information, position information and/or lane information. In this specification, the common container may be referred to as a first container, a first data part, a first sub-message, a main part, and a core part.

The application container refers to a container including information (or data) used for a specific V2I application. That is, the application container may be a container including information used for a specific V2I service. For example, the application container may be a container including specific information for a specific V2I application, for example, a work zone application of FIG. 12(b).

In this specification, a V2I application that provides a work zone safety related service may be referred to as a work zone safety application or a work zone application. In this specification, a container including information for a work zone application may be referred to as a work zone safety container or a work zone container. In this specification, the application container may be referred to as a second container, a second data part, a second sub-message, a sub-part, and a non-core part.

In an embodiment, in order to periodically provide common information for a V2I service to a peripheral device, the V2X device may periodically transmit (or broadcast) a V2I message including a common container. For example, the V2X device may transmit a V2I message including a common container in a cycle of 100msec, i.e., a cycle of 10 times per second. Further, in order to provide specific information for a specific V2I service to a peripheral device, the V2X device may periodically transmit (or broadcast) a V2I message including an application container or may transmit a V2I message including an application container on demand. In an example, a period of transmitting a V2I message including the application container may be longer than that of transmitting a V2I message including a common container.

As described above, the V2I message may have a message structure of FIG. 12, but it is not limited thereto. For example, the V2I message may have a V2X message structure described in FIGS. 8 and 9. Further, a message structure of FIG. 12 may be applied to vehicle related messages (e.g., V2X message, V2O message) having other forms and names.

In the above-described embodiment, common information for a V2I service and specific information for a specific V2I service may be included in different containers, but the present invention is not limited thereto. According to an embodiment, common information for a V2I service and specific information for a specific V2I service may be included in a single container. For example, a V2I message may include a single container, and the single container may include both common information for a V2I service and specific information for a specific V2I service.

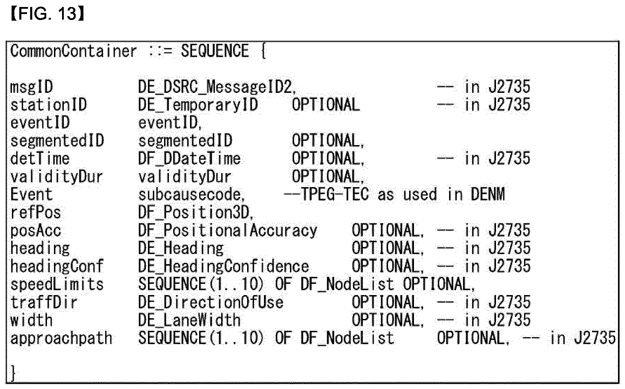

FIG. 13 illustrates a common container of a V2I message according to an embodiment of the present invention. FIG. 13 illustrates a first embodiment of a common container in a V2I message for a V2I service. In the embodiment of FIG. 13, a common container of a V2I message may be represented based on the ASN.1 method. Further, in the embodiment of FIG. 13, the common container may be configured with a sequence of at least one data element and/or at least one data frame.

Referring to FIG. 13, the common container may include ID related information, event related information, position related information and/or lane related information.

In an embodiment, ID related information may include message ID (msgID) information, station ID (StationID) information, event ID (eventide) information and/or segmented ID (segmentedID) information.

The message ID (msgID) information represents a type (or identifier) of the corresponding message. In an embodiment, the message ID information may correspond to 'DE_DSRC_MessageID2', which is data element defined in the SAE J2735 standard or may be newly defined with reference to the DE_DSRC_MessageID2.

The station ID (StationID) information represents an identifier of a station that detects an event. In an embodiment, the station ID information may correspond to 'DE_TemporaryID', which is a data element defined in the SAE J2735 standard or may be newly defined with reference to the DE_TemporaryID. The station ID information may be optionally used.

The event ID (eventID) information represents an identifier of a regionally unique or randomly generated event. That is, the event ID information is a value uniquely randomly generated in the corresponding region and may be used for identifying the corresponding event. In an embodiment, event ID information may be an unsigned 16-bit integer.

The segmented ID (segmentedID) information represents an identifier used for connecting a plurality of basic information messages (BIM) describing a complex event. In an embodiment, the segmented ID information may be an unsigned 16-bit integer. The segmented ID information may be optionally used.

In an embodiment, the event related information may include detection time (detTime) information and/or valid duration (validityDur) information.

The detection time (detTime) information represents when an event is detected. In an embodiment, the detection time information may correspond to 'DF_DDateTime', which is a data frame defined in the SAE J2735 standard or may be newly defined with reference to the DF_DDateTime. The detection time information may be optionally used.

The validity duration (validityDur) information represents a duration in which the corresponding message is valid. In an embodiment, the validity duration information may be an unsigned 17-bit integer representing a second. The validity duration information may optionally be used.

In an embodiment, the position related information may include reference position (refPos) information, position accuracy (posAcc) information, heading information and/or heading reliability (HeadingConf) information.

The reference position (refPos) information may represent information on a reference position related to an event. In an embodiment, the reference position information may provide information on a reference position related to an event, for example, information on a position of a start point at which an event has occurred. For example, when an event is an event related to work zone safety, the reference position information may represent a reference position (e.g., a position of a first start point of a work zone) of a work zone.

In the embodiment of FIG. 13, a common container may include reference position information representing a single reference position. In this case, a single V2I message may include only information on a single reference position. In an embodiment, reference position information may correspond to 'DF_Position3D', which is a data frame defined in the SAE J2735 standard or may be newly defined with reference to the DF_Position3D.

The position accuracy (posAcc) information represents a used localization solution (localization solution). That is, the position accuracy information may provide information on a localization method to be used. In an embodiment, the position accuracy information may correspond to 'DF_PositionalAccuracy', which is a data frame defined in the SAE J2735 standard or may be newly defined with reference to the DF_PositionalAccuracy. The position accuracy information may be optionally used.

The heading information illustrates a direction of an event. In an embodiment, the heading information may correspond to 'DE_Heading', which is a data element defined in the SAE J2735 standard or may be newly defined with reference to the DE_Heading. The heading information may be optionally used.

The heading reliability (HeadingConf) information represents reliability of heading of an event. In an embodiment, the heading reliability information may correspond to 'DE_HeadingConfidence', which is a data element defined in the SAE J2735 standard or may be newly defined with reference to the DE_HeadingConfidence. The heading reliability information may be optionally used.

In an embodiment, the lane related information may include speed limit (speedLimits) information, traffic direction (traffDir) information, width information and/or approach path (approachpath) information.

The speed limit (speedLimits) information represents speed limit of a current event. In an embodiment, the speed limit information may correspond to a sequence of 'DF_NodeList', which is a data frame defined in the SAE J2735 standard or may be newly defined with reference to the sequence. In this case, the speed limit information may provide information on a plurality of lane speed limits according to a size of a sequence. For example, when a size of the sequence is 10, the speed limit information may provide information on speed limit of each of 10 lanes. The speed limit information may be optionally used.

The traffic direction (traffDir) information may represent a traffic direction of an event. In an embodiment, the traffic direction information may correspond to 'DE_DirectionOfUse', which is a data element defined in the SAE J2735 standard or may be newly defined with reference to the DE_DirectionOfUse. The traffic direction information may be optionally used.

The width information represents a width of a road at a reference position. In an embodiment, the width information may correspond to 'DE_LaneWidth', which is a data element defined in the SAE J2735 standard or may be newly defined with reference to the DE_LaneWidth. The width information may be optionally used.

The approach path (approachpath) information represents an approach path to be connected to an event for a matching purpose. In an embodiment, the approach path information may correspond to a sequence of 'DF_NodeList', which is a data element defined in the SAE J2735 standard or may be newly defined with reference to the sequence. In this case, the approach path information may provide information on a plurality of lane approach paths according to a size of the sequence. For example, when a size of the sequence is 10, the approach path information may provide information on an approach path to an event of each of 10 lanes. The approach path information may be optionally used.

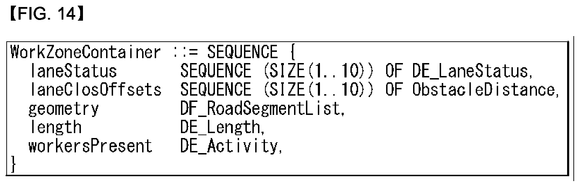

FIG. 14 illustrates an application container in a V2I message according to an embodiment of the present invention. In particular, FIG. 14 illustrates a first embodiment of an application container in a V2I message for a work zone safety related service (or application) according to an embodiment of the present invention. In the embodiment of FIG. 14, the application container may be represented based on the ASN.1 method. Further, in the embodiment of FIG. 14, the application container may be configured with a sequence of at least one data element and/or at least one data frame.

Referring to FIG. 14, the application container may include lane status (laneStatus) information, lane closed segment (laneClosOffsets) information, geometry information, length information and/or worker present (wokersPresent) information.

The lane status (laneStatus) information represents a closed lane and an open lane in a driving direction. That is, the lane status information may provide information on whether each lane is a closed lane or an open lane in a driving direction. For example, the lane status information may be a field of 11 bits describing 10 lanes. In an embodiment, the lane status information may correspond to a sequence of 'DE_LaneStatus', which is a data element defined in the SAE J2735 standard or may be newly defined with reference to the sequence. In this case, the lane status information may provide information on a lane status of a plurality of lanes according to a size of a sequence. For example, when a size of the sequence is 10, the lane status information may provide information on a lane status of each of 10 lanes.

The lane closed segment (laneClosOffsets) information represents a distance from a reference position to a closed lane. The lane closed segment information may provide information on an offset distance from a reference position of each lane to a start point or an end point of a closed lane. In an embodiment, the lane closed segment information may correspond to a sequence of 'DE_ObstacleDistance', which is a data element defined in the SAE J2735 standard or may be newly defined with reference to the sequence. In this case, the lane closed segment information may provide a distance from a plurality of reference positions to a closed lane according to a size of a sequence. For example, when a size of the sequence is 10, the lane closed segment information may provide a distance from a reference position of each of 10 lanes to a start point or an end point of a closed lane. In an embodiment, when the lane closed segment information indicates a distance from a reference position to a start point of a closed lane, information on a work segment of the corresponding lane may be determined based on lane closed segment information and length information.

The geometry information may represent a geographic position of a work zone. In an embodiment, the geometry information may correspond to a 'DF_RoadSegmentList', which is a data frame defined in the SAE J2735 standard or may be newly defined with reference to the 'DF_RoadSegmentList'.

The length information may represent a length of a work zone. For example, the length information may be an unsigned 15-bit integer representing a meter. In the embodiment of FIG. 14, an application container may include length information representing a single length. In this case, a single V2I message may include only length information of a single work zone. In an embodiment, the length information may correspond to a 'DE_Length', which is a data element defined in the SAE J2735 standard or may be newly defined with reference to the DE_Length.

The worker present (wokersPresent) information may indicate whether a worker exists in a work zone. For example, the worker information may be a 1-bit flag. In an embodiment, the worker information may correspond to 'DE_Activity', which is a data element defined in the SAE J2735 standard or may be newly defined with reference to the 'DE_Activity'.

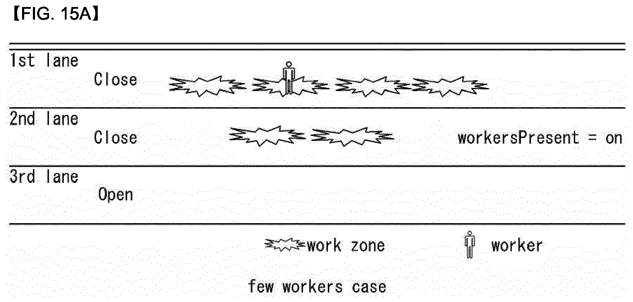

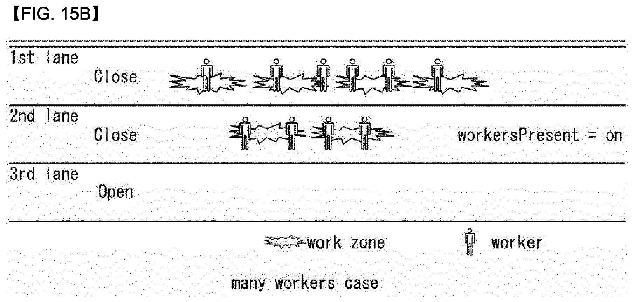

FIG. 15 illustrates a method for a V2X apparatus to provide worker related information by using a V2I message according to an embodiment of the present invention. FIG. 15(a) illustrates a method for a V2X apparatus to provide worker related information by using a first V2I message to a peripheral V2X apparatus in the case that one or a few workers are present in a work zone (a first situation). FIG. 15(b) illustrates a method for a V2X apparatus to provide worker related information by using a first V2I message to a peripheral V2X apparatus in the case that many workers are present in a work zone (a second situation). It is assumed that, except a worker related situation such as the number of workers and positions, other situations or conditions of the first situation of FIG. 15(a) and the second situation of FIG. 15(b) are the same.

In the embodiment of FIG. 15, a V2X apparatus may correspond to an RSU of an infrastructure (e.g., traffic light) located neighboring the work zone or may be an apparatus included in an RSU. In addition, the peripheral V2X apparatus may correspond to an OBU of a vehicle neighboring the work zone or may be an apparatus included in an OBU. In the present disclosure, the worker related information is information related to a worker in the work zone, for example, information on whether a worker is present in the work zone, information for the number of workers, information on whether a worker is present for each lane in the work zone, and the like.

In the embodiment of FIG. 15, the first V2I message may be a V2I message that includes a common container of FIG. 13 and an application container of FIG. 14. As an embodiment, the application container of the first V2I message includes worker presence information of 1 bit. In the present disclosure, the worker presence information of 1 bit may also be referred to as first worker presence information.

The first worker presence information is a flag of 1 bit and may represent whether a worker is present in the work zone. For example, in the case that the first worker presence information is set to a first value (e.g., on or 1), the first worker presence information may represent that a worker is present in the work zone. Or, in the case that the first worker presence information is set to a second value (e.g., off or 0), the first worker presence information may represent that a worker is not present in the work zone.

In the embodiment of FIG. 15, the V2X apparatus may provides worker related information to a peripheral V2X apparatus by using the first V2I message including the first worker presence information. However, since the first worker presence information is a 1-bit flag, not a sequence format, the V2X apparatus is able to provide only the information on whether a worker is present in the entire work zone through a single first V2I message, but unable to provide information for the number of workers in the work zone, information on whether a worker is present in each lane, and the like.

That is, the V2X apparatus is available to provide one-dimensional worker related information only such as a presence of a worker in the work zone through the first V2I message, but unavailable to provide high-dimensional (or detailed) information related to a worker such as the number of workers and a lane on which a worker is located. Accordingly, the V2X apparatus is unavailable to provide information related to a work in accordance of a situation to a peripheral V2X apparatus.

For example, like in the first situation of FIG. 15(a), in the case that a construction is proceeding in the first lane and the second lane and one or a few workers are present only in the first lane, a user of a vehicle driving on the third lane is not required to pay high attention on a worker located only in the first lane. Meanwhile, like in the second situation of FIG. 15(b), in the case that a construction is proceeding in the first lane and the second lane and many workers are present only in the first lane and the second lane, a user of a vehicle driving on the third lane is required to pay high attention on a worker in the work zone. That is, the cases of FIG. 15(a) and FIG. 15(b) have different situations related to workers.

However, in the case that the first worker presence information of 1-bit flag described above is used in order to provide the worker related information, the V2X apparatus needs to set the first worker presence information to a first value in both the first situation of FIG. 15(a) and the second situation of FIG. 15(b). In this case, the V2X apparatus may just provide the same worker related information to a peripheral V2X apparatus without regard to a situation through the first V2X message including the first worker presence information set to the first value. Accordingly, the peripheral V2X apparatus may just provide the same worker related safety warning to a user by using a V2I message but may be unavailable to provide a safety warning in accordance with a situation to a user.

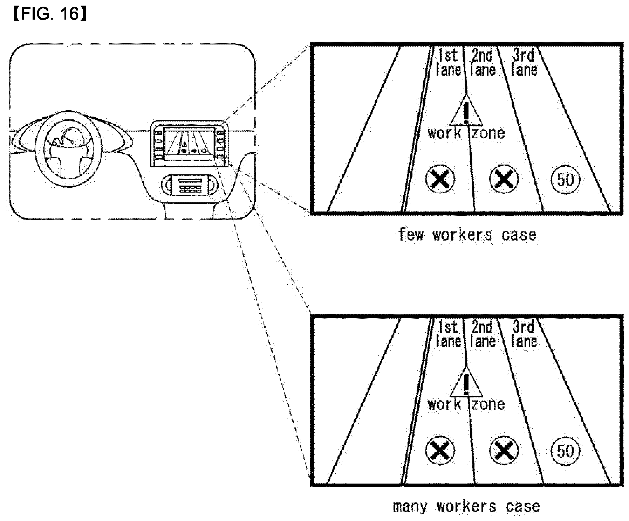

FIG. 16 illustrates a method of providing a safety warning using a V2I message by a V2X apparatus according to an embodiment of the present invention. The V2X apparatus in the embodiment of FIG. 16 may be the peripheral V2X apparatus that receives the first V2I message from the V2X apparatus of the embodiment of FIG. 15. As an embodiment, the peripheral V2X apparatus may correspond to an OBU of a vehicle or an apparatus included in an OBU.

As described above, the peripheral V2X apparatus receives the first V2I message including the first worker presence information set to the same value in the first situation of FIG. 15(a) and the second situation of FIG. 15(b). That is, the peripheral V2X apparatus receives the first V2I message including the first worker presence information set to the same first value without regard to a situation related to different workers of FIGS. 15(a) and (b).

Accordingly, in the situations of FIGS. 15(a) and (b), the peripheral V2X apparatus may provide the same worker related safety warning to a user based on the same first V2X message. As shown in FIG. 16, through a navigation screen and the like, the V2X apparatus may provide the same safety warning representing that a worker is present in the whole work zone visually in the situations of FIGS. 15(a) and (b). In addition, the V2X apparatus may provide the same safety warning visually and acoustically in the situations of FIGS. 15(a) and (b) by using various output interfaces (e.g., HUD, speaker, etc.).

As such, in the case that the worker related information is provided by using the first worker presence information of 1-bit flag, the V2X apparatus may just provide information for whether a worker is present in the whole work zone simply to a user but may be unavailable to provide various and detailed worker presence information in accordance of a related situation to a user. Accordingly, a new type of worker presence information is required to provide worker related information.

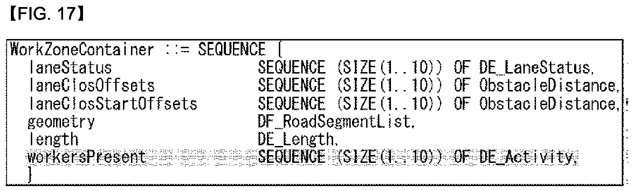

FIG. 17 illustrates an application container in a V2I message according to another embodiment of the present invention. Particularly, FIG. 17 shows a second embodiment of the application container in a V2I message for a service (or application) related to a work zone according to an embodiment of the present invention. In the embodiment of FIG. 17, the application container may be expressed based on ASN.1 scheme. In the embodiment of FIG. 17, the overlapped description with the embodiment of FIG. 14 is omitted.

Referring to FIG. 17, the application container may include lane state (laneStatus) information, lane closure section (laneClosOffsets) information, geometry information, length information and/or worker presence (workersPresent) information in a sequence format. That is, a work zone container may include worker presence information of a sequence format instead of the worker presence information of 1-bit flag. Here, the lane state information, the lane closure section information, the geometry information and the length information are as described in FIG. 14, and detailed description is omitted. In the present disclosure, the worker presence information of a sequence format may also be referred to as second worker presence information.

In the embodiment of FIG. 17, the second worker presence information represents whether a worker is present in each lane. As an embodiment, the second worker presence information may correspond to a sequence of 'DE_Activity' which is a data element defined in SAE J2735 standard or that of newly defined by referring to it. In this case, the second worker presence information may provide information on whether a worker is present for a plurality of lanes according to a size of the sequence. For example, in the case that a size of the sequence is 10, the second worker presence information may provide information on whether a worker is present or not for each of 10 lanes.

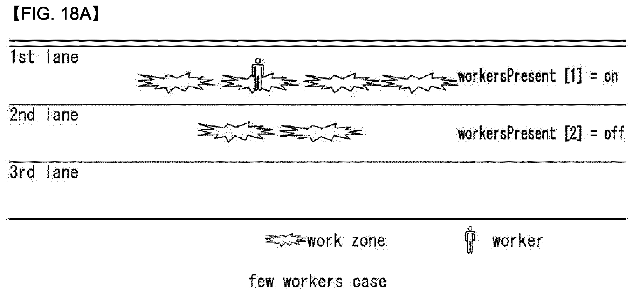

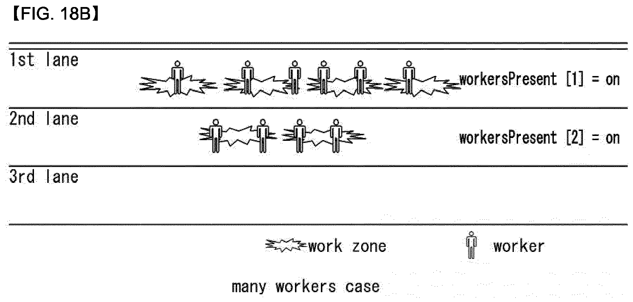

FIG. 18 illustrates a method of providing worker related information using a V2I message by a V2X apparatus according to an embodiment of the present invention. FIG. 18(a) shows a method of providing worker related information to a peripheral V2X apparatus by using a second V2I message by a V2X apparatus in the case that one or a few workers are present in a work zone (a first situation). FIG. 18(b) shows a method of providing worker related information to a peripheral V2X apparatus by using a second V2I message by a V2X apparatus in the case that many workers are present in a work zone (a second situation). It is assumed that the first situation of FIG. 18(a) and the second situation of FIG. 18(b) are the same as the first situation of FIG. 16(a) and the second situation of FIG. 16(b), respectively. In the embodiment of FIG. 18, the overlapped description with the embodiment of FIG. 15 is omitted.

In the embodiment of FIG. 18, the second V2I message may be a V2I message including the common container of FIG. 13 and the application container of FIG. 17. As an embodiment, the application container of the second V2I message includes worker presence information of a sequence format. As described above, the worker presence information of a sequence format may also be referred to as second worker presence information.

The second worker presence information may represent whether a worker is present in each lane. For example, in the case that the worker presence information (e.g., workersPresent[n]) having n^{th} sequence number in the second worker presence information set to a first value (e.g., on or 1), the second worker presence information represents that a worker is present in the n^{th} lane. Or, in the case that the worker presence information (e.g., workersPresent[n]) having n^{th} sequence number in the second worker presence information set to a second value (e.g., off or 0), the second worker presence information represents that a worker is not present in the n^{th} lane. As an embodiment, the second worker presence information may represent whether a worker is present in each lane only for a lane in a work zone, but not limited thereto, and represent whether a worker is present in each lane for all lanes.

For example, like in the first situation of FIG. 18(a), a construction is proceeding in the first lane and the second lane and a worker is present only in the first lane, the V2X apparatus may set the worker presence information having a first sequence number (e.g., workersPresent[1]) in the second worker presence information to a first value (e.g., on or 1) and set the worker presence information having a second sequence number (e.g., workersPresent[2]) to a second value (e.g., off or 0).

Alternatively, like in the second situation of FIG. 18(a), a construction is proceeding in the first lane and the second lane and a worker is present in the first lane and the second lane, the V2X apparatus may set both of the worker presence information having a first sequence number (e.g., workersPresent[1]) in the second worker presence information and the worker presence information having a second sequence number (e.g., workersPresent[2]) to a first value (e.g., on or 1).

The V2X apparatus may transmit the second V2I message including the second worker presence information set to represent whether a worker is present in each lane in the work zone to a peripheral V2X apparatus. Through this, the V2X apparatus may provide the information for presence of worker in each lane through a single second V2I message to a peripheral V2X apparatus. Accordingly, in comparison with the embodiment of FIG. 15, the V2X apparatus may provide more accurate worker related information considering a worker related situation for each lane to a peripheral V2X apparatus.

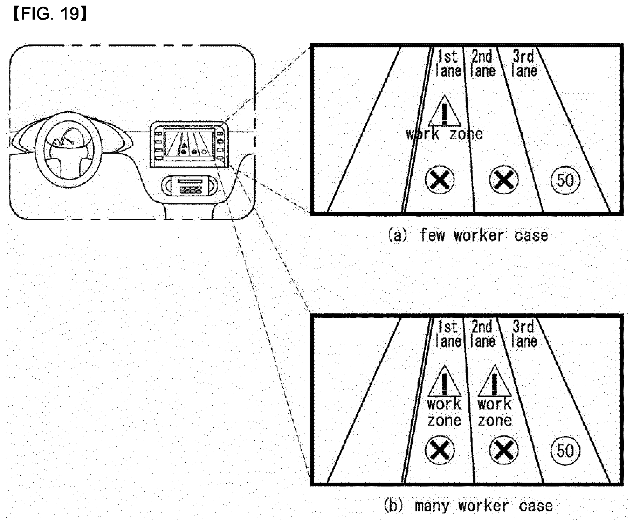

FIG. 19 illustrates a method of providing a safety warning using a V2I message by a V2X apparatus according to an embodiment of the present invention. The V2X apparatus in the embodiment of FIG. 19 may be the peripheral V2X apparatus that receives the second V2I message from the V2X apparatus of the embodiment of FIG. 18. As an embodiment, the peripheral V2X apparatus may correspond to an OBU of a vehicle or an apparatus included in an OBU.

As described above, the peripheral V2X apparatus receives the second V2I message including the different types of second worker presence information in the first situation of FIG. 18(a) and the second situation of FIG. 18(b). Accordingly, in the situations of FIGS. 18(a) and (b), the peripheral V2X apparatus may provide different worker related safety warnings to a user based on the different second V2X messages.

As shown in FIG. 19, through a navigation screen and the like, the V2X apparatus may provide a worker related safety warning to a user only in the first lane in the situation of FIG. 18(a) and provide a worker related safety warning to a user only in the first lane and the second lane in the situation of FIG. 18(b). Through this, a user of the vehicle driving on the third lane may pay more attention to a worker in the situation of FIG. 18(b) in comparison with the situation of FIG. 18(a).

As such, in the case of using the second worker presence information in a sequence format instead of using the first worker presence information of 1-bit flag, there is an advantage that the V2X apparatus may provide worker related information subdivided for each lane to a user. However, even in this case, the V2X apparatus may just provide only the information on a presence of a worker for each lane but may not provide information on the number of workers in a work zone or information for the number of workers in each lane in a work zone. Accordingly, to provide more accurate worker related information, new type of information is requested such as information representing a state (e.g., the number of workers) of a worker.

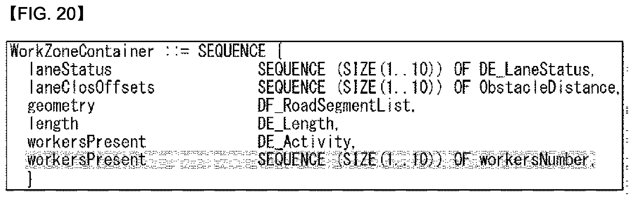

FIG. 20 illustrates an application container in a V2I message according to another embodiment of the present invention. Particularly, FIG. 20 shows a third embodiment of the application container in a V2I message for a service (or application) related to a work zone according to an embodiment of the present invention. In the embodiment of FIG. 20, the application container may be expressed based on ASN.1 scheme. In the embodiment of FIG. 20, the overlapped description with the embodiment of FIG. 14 and FIG. 17 is omitted.

Referring to FIG. 20, the application container may include lane state (laneStatus) information, lane closure section (laneClosOffsets) information, geometry information, length information, worker presence (workersPresent) information and/or worker state (WorkerStates) information. That is, a work zone container may further include the worker state information. Here, the lane state information, the lane closure section information, the geometry information, the length information and the worker presence information are as described in FIG. 14, and detailed description is omitted.

In the embodiment of FIG. 20, the worker state information represents a state of worker in each lane. For example, the worker state information may represent the number of workers in each lane. As an embodiment, the worker state information may correspond to a sequence of 'workersNumber', which is a data element defined in SAE J2735 standard or that of newly defined by referring to it. In this case, the worker state information may provide information for a state of worker for a plurality of lanes according to a size of the sequence. For example, in the case that a size of the sequence is 10, the worker state information may provide information for a state of worker for each of 10 lanes.

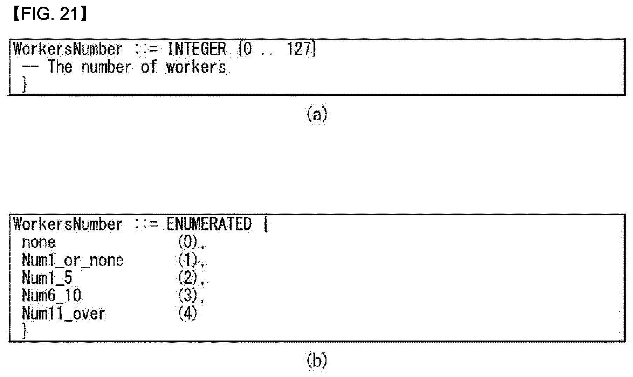

FIG. 21 illustrate a display method of the worker state information in the application container of FIG. 20. Particularly, FIG. 21 shows a method of displaying the number of workers through the worker state information. FIG. 21(a) shows a first embodiment of the method of displaying the number of workers through the worker state information, and FIG. 21(b) shows a second embodiment of the method of displaying the number of workers through the worker state information.

In the embodiment of FIG. 21, the worker state information may be a sequence of the number of worker (workersNumber) information. The number of worker information may represent the number of workers or a range of number in various ways. In this case, the worker state information may provide information for the number of workers for each lane (or each sequence) based on the number of worker information for each lane (or each sequence).

As an embodiment, as shown in FIG. 21(a), the number of worker information may represent an accurate number of workers with an integer value in a predetermined range (e.g., integer from 0 to 127). For example, in the case that the number of worker information is set to 0 value, the worker state information may indicate that there is no worker in a corresponding lane. Or, in the case that the number of worker information is set to n value between 1 to 127, the worker state information may indicate that there are n workers in a corresponding lane. In the present disclosure, the number of worker information as described in the embodiment of FIG. 21(a) may also be referred to as first number of workers information.

As another embodiment, as shown in FIG. 21(b), the number of worker information may represent a range of the number of workers with a predetermined data value of enumerated type. For example, in the case that the number of worker information is set to first value (e.g., none or 0 value), the worker state information may indicate that there is no worker in a corresponding lane. Or, in the case that the number of worker information is set to a second value (e.g., Num1_or_none or 1 value), the worker state information may indicate that there is no worker or a worker in a corresponding lane. Or, in the case that the number of worker information is set to a third value (e.g., Num1_5 or 2 value), the worker state information may indicate that there are one or more and five or less workers in a corresponding lane. Or, in the case that the number of worker information is set to a fourth value (e.g., Num6_10 or 3 value), the worker state information may indicate that there are six or more and ten or less workers in a corresponding lane. Or, in the case that the number of worker information is set to a fifth value (e.g., Num11_over or 4 value), the worker state information may indicate that there are eleven or more workers in a corresponding lane. In the present disclosure, the number of worker information as described in the embodiment of FIG. 21(b) may also be referred to as second number of worker information.

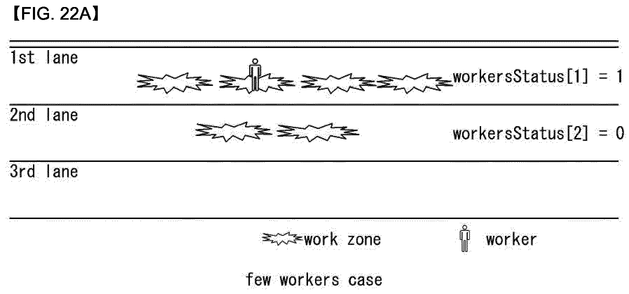

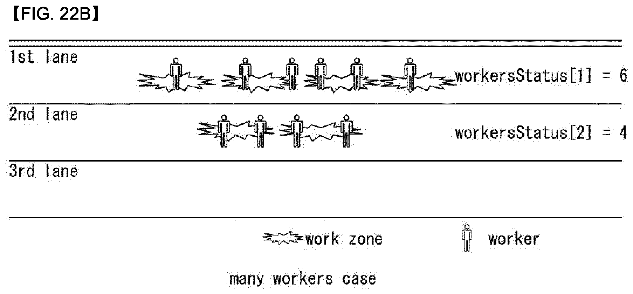

FIG. 22 illustrates a method of providing worker related information using a V2I message by a V2X apparatus according to an embodiment of the present invention. FIG. 22(a) shows a method of providing worker related information to a peripheral V2X apparatus by using a third V2I message by a V2X apparatus in the case that one or a few workers are present in a work zone (a first situation). FIG. 22(b) shows a method of providing worker related information to a peripheral V2X apparatus by using a third V2I message by a V2X apparatus in the case that many workers are present in a work zone (a second situation). It is assumed that the first situation of FIG. 22(a) and the second situation of FIG. 22(b) are the same as the first situation of FIG. 16(a) and the second situation of FIG. 16(b), respectively. In the embodiment of FIG. 22, the overlapped description with the embodiments of FIG. 15 and FIG. 18 is omitted.

In the embodiment of FIG. 22, the third V2I message may be a V2I message including the common container of FIG. 13 and the application container of FIGS. 20 and 21. As an embodiment, the application container of the first V2I message may include the worker state information, and the worker state information may be a sequence of the first number of worker information as shown in FIG. 21(a) or the second number of worker information as shown in FIG. 21(b). Hereinafter, with reference to FIGS. 22(a) and (b), it is described embodiments for the case that the worker state information is a sequence of the first number of worker information or a sequence of the second number of workers information.

### (1) Embodiment in the case that the worker state information is a sequence of the first number of workers information

In the case that the worker state information is a sequence of the first number of workers information, the worker state information may represent an actual number of workers in each lane. For example, in the case that the first number of worker information having the n^{th} sequence number in the worker state information (e.g., workersStatus[n]) is set to m value (e.g., an integer value between 0 to 127), the second number of worker information may represent that there are m workers in the n^{th} lane.

As in the first situation of FIG. 22(a), in the case that a construction is proceeding in the first lane and the second lane and only one worker is present only in the first lane, the V2X apparatus may set the first number of worker information having a first sequence number (e.g., workersStatus[1]) to 1 and set the first number of worker information having a second sequence number (e.g., workersStatus[2]) to 0.

As in the second situation of FIG. 22(b), in the case that a construction is proceeding in the first lane and the second lane and six workers are present and four workers are present in the second lane, the V2X apparatus may set the first number of worker information having a first sequence number (e.g., workersStatus[1]) to 6 and set the first number of worker information having a second sequence number (e.g., workersStatus[2]) to 4.

### (2) Embodiment in the case that the worker state information is a sequence of the second number of workers information

In the case that the worker state information is a sequence of the second number of workers information, the worker state information may represent a range of the number of workers in each lane. For example, in the case that the second number of worker information having the n^{th} sequence number in the worker state information (e.g., workersStatus[n]) is set to m value (e.g., an integer value between 0 to 4), the second number of worker information may represent that the number of workers in the range corresponding to m value is present in the n^{th} lane.

As in the first situation of FIG. 22(a), in the case that a construction is proceeding in the first lane and the second lane and only one worker is present only in the first lane, the V2X apparatus may set the second number of worker information having a first sequence number (e.g., workersStatus[1]) to 1 or 2 and set the second number of worker information having a second sequence number (e.g., workersStatus[2]) to 0.

As in the second situation of FIG. 22(b), in the case that a construction is proceeding in the first lane and the second lane and six workers are present and four workers are present in the second lane, the V2X apparatus may set the second number of worker information having a first sequence number (e.g., workersStatus[1]) to 6 and set the second number of worker information having a second sequence number (e.g., workersStatus[2]) to 4.

The V2X apparatus may transmit the third V2I message including the worker state information configured to represent a state of worker in each lane in a work zone to a peripheral V2X device. Through this, the V2X apparatus may provide accurate information for a state of worker for each lane to a peripheral V2X device. Comparing the embodiments of FIGS. 15 and 18, the V2X apparatus may provide more accurate worker related information considering a situation related to a worker for each lane to a peripheral V2X device.

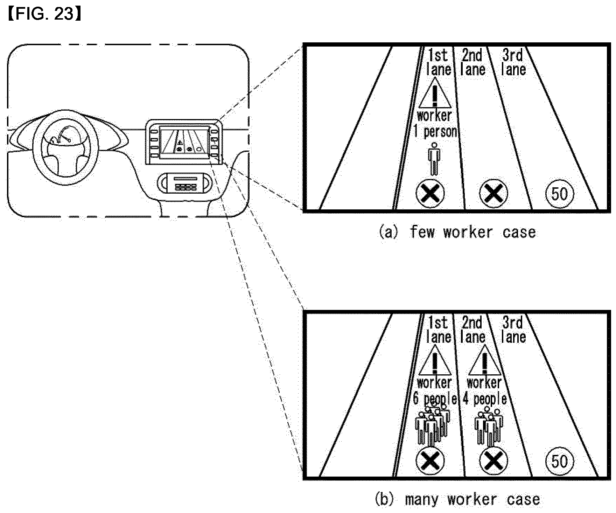

FIG. 23 illustrates a method of providing a safety warning using a V2I message by a V2X apparatus according to an embodiment of the present invention. The V2X apparatus in the embodiment of FIG. 23 may be the peripheral V2X apparatus that receives the third V2I message from the V2X apparatus of the embodiment of FIG. 22. As an embodiment, the peripheral V2X apparatus may correspond to an OBU of a vehicle or an apparatus included in an OBU.

As described above, the peripheral V2X apparatus receives the third V2I message including the different types of second worker presence information in the first situation of FIG. 22(a) and the second situation of FIG. 22(b). Accordingly, in the situations of FIGS. 22(a) and (b), the peripheral V2X apparatus may provide different worker related safety warnings to a user based on the different third V2X messages.

As shown in FIG. 23, through a navigation screen and the like, the V2X apparatus may provide a worker related safety warning informing that a worker is present in the first lane to a user in the situation of FIG. 22(a) and provide a worker related safety warning informing that many workers are present in the first lane and the second lane to a user in the situation of FIG. 22(b). Through this, a user of the vehicle driving on the third lane may pay more attention to a worker in the situation of FIG. 22(b) in comparison with the situation of FIG. 22(a).

As such, in the case of using more worker state information, there is an advantage that the V2X apparatus may provide worker related information subdivided for each lane to a user.

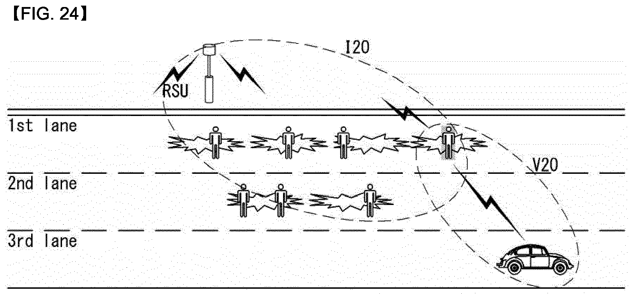

FIG. 24 illustrates a method of providing the worker related information using an 120 message or a V2O message by a V2X apparatus according to an embodiment of the present invention. In the embodiment of FIG. 24, the V2X apparatus may be a V2X apparatus included in the other thing, not a vehicle or an infra. For example, the V2X apparatus may correspond to an OBU of a protective gear (e.g., protective helmet) for securing safety of a worker or an apparatus included in an OBU.

Referring to FIG. 24, the V2X apparatus of a worker may transmit an 120 message or a V2O message periodically. As an embodiment, the V2X apparatus may broadcast an 120 message or a V2O message periodically. The 120 message is referred to a message used for the 120 service between an infra and the other thing, and the V2O message is referred to a message used for the 120 service between a vehicle and the other thing. In the present disclosure, the 120 message and the V2O message may be commonly called as an O2X message.

As an embodiment, the O2X message may include message identification (ID) information, user identification (ID) information and/or geometric information. The message ID information is referred to as information for identifying the corresponding O2X message. The user ID information is referred to as information for identifying a user that transmits the corresponding O2X message. The geometric information is referred to as information for representing a current position of a user that transmits the corresponding O2X message.

For example, the in the case that the O2X service (or O2X application) is a worker related service (or application), the user ID information may represent identification information of a worker, and the geometric information may represent a current position of the worker. Here, the worker related service may be a service related to a worker in a work zone, for example, a service for protecting safety of a worker, a service for informing a state of worker, and the like.

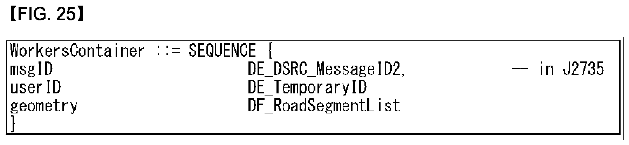

As an embodiment, the V2X apparatus (e.g., V2X apparatus of a worker) may transmit (or broadcast) the 120 message (or O2X message) including the user ID information and the geometric information periodically. In this case, the V2X apparatus (e.g., V2X apparatus of an infra) that receives the 120 message may obtain information for the number and position of workers using the 120 message. In addition, the V2X apparatus of an infra may also obtain information for the number of workers in each lane by comparing the geometric information of a lane and the geometric information of the worker. Through this, the V2X apparatus of an infra may transmit a V2I message including the worker presence information, the worker state information and the like described above to a peripheral V2X apparatus (e.g., the V2X apparatus of a vehicle). In the embodiment of FIG. 25, the V2X apparatus of an infra may correspond to an RSU of an infrastructure (e.g., traffic light) or an apparatus included in an RSU. In addition, the V2X apparatus of a vehicle may correspond to an OBU of a vehicle neighboring a work zone or an apparatus included in an OBU.

According to an embodiment, the V2X apparatus (e.g., V2X apparatus of a worker) may transmit (or broadcast) the V2O message (or O2X message) including the user ID information and the geometric information periodically. In this case, the V2X apparatus (e.g., V2X apparatus of a vehicle) that receives the V2O message may provide the worker related information, the safety warning, and the like to a user through an output interface. In this way, the V2X apparatus of a worker may provide a warning message directly related to a worker to a V2X apparatus of a neighboring vehicle.

FIG. 25 illustrates an O2X message according to an embodiment of the present invention. Particularly, the O2X message of FIG. 25 shows an example of the O2X message of FIG. 24. In the embodiment of FIG. 25, the O2X message may be expressed based on ASN.1 scheme.

Referring to FIG. 25, the O2X message may include message identification (ID) information, user identification (ID) information and/or geometric information.

The message ID information is referred to as information for identifying the corresponding O2X message. As an embodiment, the message ID information may correspond to 'DE_DSRC_MessagelD2', which is a data element defined in SAE J2735 standard or may be that of newly define with reference to it. For example, in the case that the O2X service is a worker related service, a V2X apparatus may identify a worker related message through the message ID information in the O2X message.

The user ID information is referred to as information for identifying a user that transmits the corresponding O2X message. As an embodiment, the user ID information may correspond to 'DE_TemporaryID', which is a data element defined in SAE J2735 standard or may be that of newly define with reference to it. For example, in the case that the O2X service is a worker related service, a V2X apparatus may identify a worker that transmits the O2X message through the user ID information in the O2X message.

The geometric information is referred to as information for representing a current position of a user that transmits the corresponding O2X message. As an embodiment, the geometric information may correspond to 'DF_RoadSegmentList', which is a data element defined in SAE J2735 standard or may be that of newly define with reference to it. For example, in the case that the O2X service is a worker related service, a V2X apparatus may identify information for work position of a worker that transmits the O2X message through the geometric information in the O2X message.

The embodiments described above are embodiments for a V2X communication method for safety of a worker in a work zone or protecting a safety of vehicle that drives periphery of a work zone. Meanwhile, hereinafter, the embodiments for a V2X communication method for protecting a safety of heavy equipment in a work zone and a safety of vehicle that drives periphery of a work zone.

First, it is described the embodiment for a V2X communication of an infra to provide heavy equipment related information such as a position and state of a heavy equipment in a work zone to a peripheral V2X apparatus indirectly through a V2I message. Next, it is described the embodiment for a V2X communication of a heavy equipment to provide heavy equipment related information to a peripheral V2X apparatus directly through a V2I message or a V2V message.

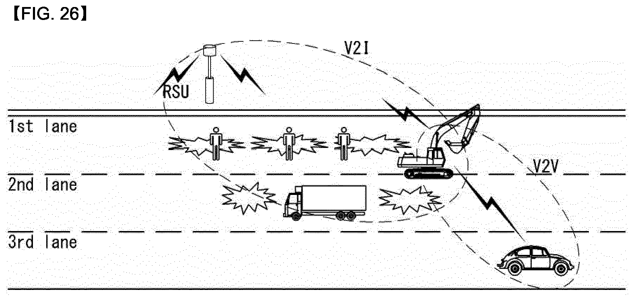

FIG. 26 illustrates a method of communicating with a peripheral V2X apparatus by a V2X apparatus according to an embodiment of the present invention. In the embodiment of FIG. 26, the V2X apparatus may be a V2X apparatus of a heavy equipment in a work zone, a V2X apparatus of an infra located in periphery of a work zone or a V2X apparatus of a vehicle moving in periphery of a work zone. In the present disclosure, the V2X apparatus of a heavy equipment may correspond to an OBU of the heavy equipment (e.g., dump truck, excavator, etc.) located in periphery of a work zone or an apparatus included in an OBU. In addition, the V2X apparatus of an infra may correspond to an RSU of the infra in periphery of a work zone or an apparatus included in an RSU. Furthermore, the V2X apparatus of a vehicle may correspond to an OBU of the vehicle moving around a work zone or a stationary vehicle or an apparatus included in an OBU.

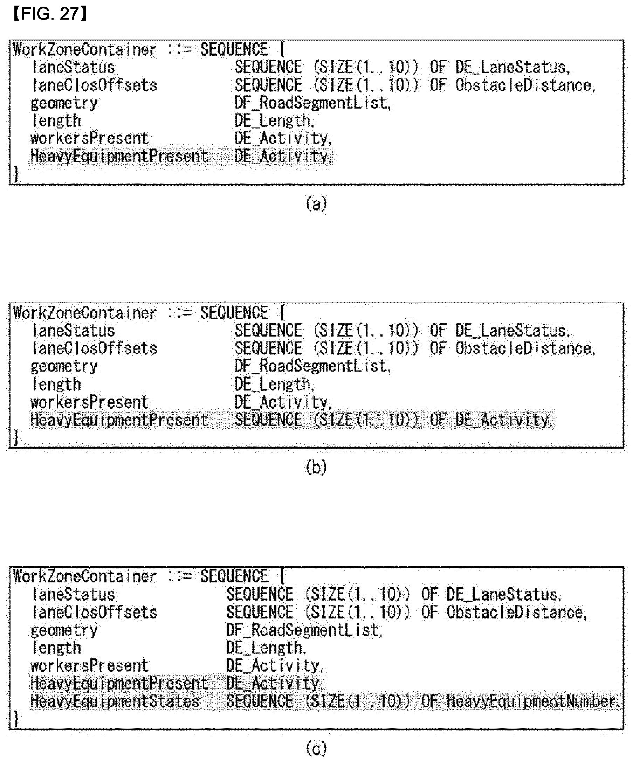

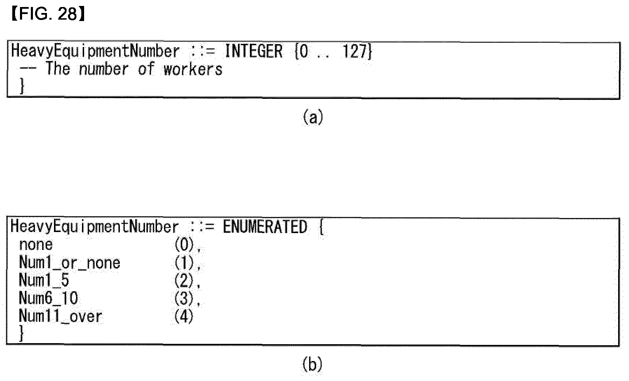

Referring to FIG. 26, the V2X apparatus of an infra may transmit a V2I message including heavy equipment related information to a peripheral V2X apparatus (e.g., V2X apparatus of a vehicle). Here, the heavy equipment related information is information related to a heavy equipment in a work zone, for example, information for a position or the number of the heavy equipment. The detailed embodiment of the V2I message transmitted by the V2X apparatus of an infra is described below with reference to FIGS. 27 and 28.

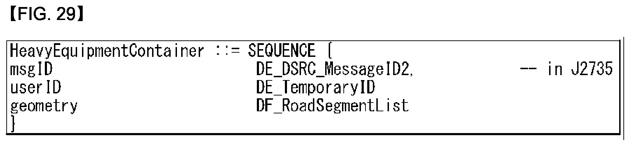

In addition, the V2X apparatus of a heavy equipment may transmit a V2I message or a V2V message including the heavy equipment related information to a peripheral V2X apparatus (e.g., V2X apparatus of a vehicle or V2X apparatus of an infra). As an embodiment, the V2X apparatus of a heavy equipment may transmit the heavy equipment related information periodically. The detailed embodiment of the V2I message transmitted by the V2X apparatus of a heavy equipment is described below with reference to FIG. 29.

FIG. 27 illustrates an application container in a V2I message according to another embodiment of the present invention. Particularly, FIG. 27 shows a fourth embodiment, a fifth embodiment and a sixth embodiment of the application container in the V2I message for a work zone related service (or application) according to an embodiment of the present invention. In the embodiment of FIG. 27, the application container may be expressed based on ASN.1 scheme. In the embodiment of FIG. 27, the description overlapped with the embodiments of FIGS. 14, 17 and 20 are omitted.

Referring to FIG. 27(a), a work zone container may include lane state (laneStatus) information, lane closure section (laneClosOffsets) information, geometry information, length information, worker presence (workersPresent) information and/or heavy equipment presence (HeavyEquipmentPresent) information of 1-bit flag. Here, the lane state information, the lane closure section information, the geometry information, the length information and the worker presence information are as described in FIG. 14, and detailed description is omitted. In the present disclosure, the heavy equipment presence information of 1-bit flag may also be referred to as first heavy equipment presence information.

In the embodiment of FIG. 27(a), the first heavy equipment presence information is a flag of 1 bit and may represent whether a heavy equipment is present in the work zone. For example, in the case that the first heavy equipment presence information is set to a first value (e.g., 1), the first heavy equipment presence information may represent that a heavy equipment is present in the work zone. Or, in the case that the first heavy equipment presence information is set to a second value (e.g., 0), the first heavy equipment presence information may represent that a heavy equipment is not present in the work zone. The first heavy equipment presence information may correspond to a sequence of 'DE_Activity' which is a data element defined in SAE J2735 standard or that of newly defined by referring to it.

In the embodiment of FIG. 27(a), since the heavy equipment presence information is a flag of 1 bit, not a sequence format, the V2X apparatus may just provide information on whether a heavy equipment is present in the whole work zone through a V2I message including the heavy equipment presence information, but may be unavailable to provide information for the number of heavy equipments in the work zone, information on whether a heavy equipment is present in each lane, and the like. Accordingly, the V2X apparatus is hard to provide the heavy equipment related information in accordance of a situation to a peripheral V2X apparatus.

Referring to FIG. 27(b), a work zone container may include lane state (laneStatus) information, lane closure section (laneClosOffsets) information, geometry information, length information, worker presence (workersPresent) information and/or heavy equipment presence (HeavyEquipmentPresent) information of 1-bit flag. That is, the work zone container may include the heavy equipment presence information of a sequence format instead of the heavy equipment presence information of 1-bit flag. Here, the lane state information, the lane closure section information, the geometry information, the length information and the worker presence information are as described in FIG. 14, and detailed description is omitted. In the present disclosure, the heavy equipment presence information of a sequence format may also be referred to as second heavy equipment presence information.

In the embodiment of FIG. 27(b), the second heavy equipment presence information may represent whether a heavy equipment is present in each lane. As an embodiment, the second heavy equipment presence information may correspond to a sequence of 'DE_Activity' which is a data element defined in SAE J2735 standard or that of newly defined by referring to it. In this case, the second heavy equipment presence information may provide information on whether a heavy equipment is present for a plurality of lanes according to a size of the sequence. For example, in the case that a size of the sequence is 10, the second heavy equipment presence information may provide information on whether a heavy equipment is present or not for each of 10 lanes. In this case, a method of indicating whether a heavy equipment is present through the second heavy equipment presence information may be the same as the method of indicating whether a heavy equipment is present through the first heavy equipment presence information.

In the embodiment of FIG. 27(b), in comparison with the embodiment of FIG. 27(a), the V2X apparatus may provide more accurate heavy equipment related information considering a situation related to a heavy equipment in each lane to a peripheral V2X apparatus. However, even in this case, the V2X apparatus may just provide only the information on a presence of a heavy equipment for each lane but may be unavailable to provide information for the number of heavy equipments in the work zone, information on whether a heavy equipment is present in each lane, and the like.

Referring to FIG. 27(c), a work zone container may include lane state (laneStatus) information, lane closure section (laneClosOffsets) information, geometry information, length information, worker presence (workersPresent) information, heavy equipment presence (HeavyEquipmentPresent) information and/or heavy equipment state (HeavyEquipmentStates) information. That is, the work zone container may further include the heavy equipment state information. Here, the lane state information, the lane closure section information, the geometry information, the length information and the worker presence information are as described in FIG. 14, and detailed description is omitted.

In the embodiment of FIG. 27(c), the heavy equipment state information may represent a state of heavy equipment in each lane. For example, the heavy equipment state information may represent the number of heavy equipments in each lane. As an embodiment, the heavy equipment state information may correspond to a sequence of 'HeavyEquipmentNumber', which is a data element defined in SAE J2735 standard or that of newly defined by referring to it. In this case, the heavy equipment state information may provide information for a state of the heavy equipment for a plurality of lanes according to a size of a sequence. For example, in the case that a size of the sequence is 10, the heavy equipment state information may provide information of a state of the heavy equipment for each of 10 lanes.

In the embodiment of FIG. 27(b), the V2X apparatus may provide information of a state of the heavy equipment for each lane to a peripheral V2X apparatus. Accordingly, in comparison with the embodiment of FIG. 27(a) and (b), the V2X apparatus may provide more accurate heavy equipment related information considering a situation related to a heavy equipment in each lane to a peripheral V2X apparatus.

FIG. 28 illustrate a display method of the heavy equipment state information in the application container of FIG. 27(c). Particularly, FIG. 28 shows a method of displaying the number of heavy equipments through the heavy equipment state information. FIG. 28(a) shows a first embodiment of the method of displaying the number of heavy equipments through the heavy equipment state information, and FIG. 21(b) shows a second embodiment of the method of displaying the number of heavy equipments through the heavy equipment state information.

In the embodiment of FIG. 28, the heavy equipment state information may be a sequence of the number of heavy equipment (HeavyEquipmentNumber) information. The number of heavy equipment information may represent the number of heavy equipments or a range of number in various ways. In this case, the heavy equipment state information may provide information for the number of heavy equipments for each lane (or each sequence) based on the number of heavy equipment information for each lane (or each sequence).

As an embodiment, as shown in FIG. 28(a), the number of heavy equipment information may represent an accurate number of heavy equipments with an integer value in a predetermined range (e.g., integer from 0 to 127). For example, in the case that the number of heavy equipment information is set to 0 value, the heavy equipment state information may indicate that there is no heavy equipment in a corresponding lane. Or, in the case that the number of heavy equipment information is set to n value between 1 to 127, the heavy equipment state information may indicate that there are n heavy equipments in a corresponding lane. In the present disclosure, the number of heavy equipment information as described in the embodiment of FIG. 28(a) may also be referred to as first number of heavy equipment information.

As another embodiment, as shown in FIG. 28(b), the number of heavy equipment information may represent a range of the number of heavy equipments with a predetermined data value of enumerated type. For example, in the case that the number of heavy equipment information is set to first value (e.g., none or 0 value), the heavy equipment state information may indicate that there is no heavy equipment in a corresponding lane. Or, in the case that the number of heavy equipment information is set to a second value (e.g., Num1_or_none or 1 value), the heavy equipment state information may indicate that there is no heavy equipment or a heavy equipment in a corresponding lane. Or, in the case that the number of heavy equipment information is set to a third value (e.g., Num1_5 or 2 value), the heavy equipment state information may indicate that there are one or more and five or less heavy equipments in a corresponding lane. Or, in the case that the number of heavy equipment information is set to a fourth value (e.g., Num6_10 or 3 value), the heavy equipment state information may indicate that there are six or more and ten or less workers in a corresponding lane. Or, in the case that the number of heavy equipment information is set to a fifth value (e.g., Num11_over or 4 value), the heavy equipment state information may indicate that there are eleven or more heavy equipments in a corresponding lane. In the present disclosure, the number of heavy equipment information as described in the embodiment of FIG. 28(b) may also be referred to as second number of heavy equipment information.

FIG. 29 illustrates a method of providing heavy equipment related information using a V2I message or a V2V message by a V2X apparatus according to an embodiment of the present invention. In the embodiment of FIG. 29, the V2X apparatus may be a V2X apparatus of a heavy equipment.

As an embodiment, the V2X apparatus may transmit the V2I message or the V2V message periodically. As an embodiment, the V2X apparatus may broadcast the V2I message or the V2V message periodically. In the present disclosure, the V2I message and the V2V message may be commonly called as a V2X message.

Referring to FIG. 29, the V2X message may include message identification (ID) information, user identification (ID) information and/or geometric information.

The message ID information is referred to as information for identifying the corresponding V2X message. As an embodiment, the message ID information may correspond to 'DE_DSRC_MessageID2', which is a data element defined in SAE J2735 standard or may be that of newly define with reference to it. For example, in the case that the V2X service is a heavy equipment related service, a V2X apparatus may identify a heavy equipment related message through the message ID information in the V2X message.

The user ID information is referred to as information for identifying a user that transmits the corresponding V2X message. As an embodiment, the user ID information may correspond to 'DE_TemporaryID', which is a data element defined in SAE J2735 standard or may be that of newly define with reference to it. For example, in the case that the V2X service is a heavy equipment related service, a V2X apparatus may identify a heavy equipment that transmits the V2X message through the user ID information in the V2X message.

The geometric information is referred to as information for representing a current position of a user that transmits the corresponding O2X message. As an embodiment, the geometric information may correspond to 'DF_RoadSegmentList', which is a data element defined in SAE J2735 standard or may be that of newly define with reference to it. For example, in the case that the V2X service is a heavy equipment related service, a V2X apparatus may identify information for work position of a heavy equipment that transmits the V2X message through the geometric information in the V2X message.

As an embodiment, the V2X apparatus (e.g., V2X apparatus of a heavy equipment) may transmit (or broadcast) the V2I message (or V2X message) including the user ID information and the geometric information periodically. In this case, the V2X apparatus (e.g., V2X apparatus of an infra) that receives the V2I message may obtain information for the number and position of heavy equipment using the V2I message. In addition, the V2X apparatus of an infra may also obtain information for the number of heavy equipments in each lane by comparing the geometric information of a lane and the geometric information of the heavy equipment. Through this, the V2X apparatus of an infra may transmit a V2I message including the heavy equipment presence information, the heavy equipment state information and the like described above to a peripheral V2X apparatus (e.g., the V2X apparatus of a vehicle). In this case, the peripheral V2X apparatus (e.g., the V2X apparatus of a vehicle) that receives the V2I message may provide the heavy equipment related information to a user through an output interface. In this way, the V2X apparatus of a heavy equipment may provide a warning message related to a heavy equipment indirectly to a V2X apparatus of a neighboring vehicle through the V2X apparatus of an infra.

According to an embodiment, the V2X apparatus (e.g., V2X apparatus of a heavy equipment) may transmit (or broadcast) the V2V message (or V2X message) including the user ID information and the geometric information periodically. In this case, the V2X apparatus (e.g., V2X apparatus of a vehicle) that receives the V2V message may provide the heavy equipment related information, the safety warning, and the like to a user through an output interface. In this way, the V2X apparatus of a heavy equipment may provide a warning message directly related to a heavy equipment to a V2X apparatus of a neighboring vehicle.

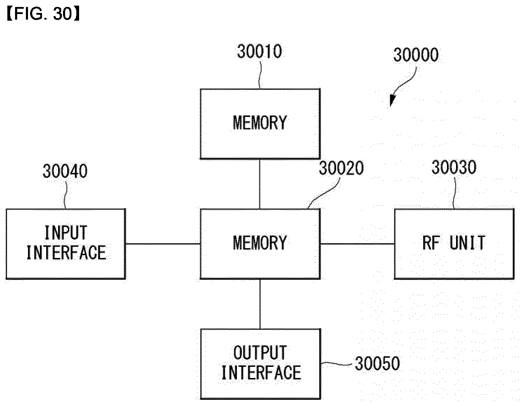

FIG. 30 illustrates a block diagram of a V2X communication apparatus according to an embodiment of the present invention.

In FIG. 30, a V2X communication apparatus 30000 may include a memory 30010, a processor 30020 and an RF unit 30030. In addition, the V2X communication apparatus 30000 may further include an input interface 30040 and an output interface 30050. As an embodiment, the input interface 30040 and the output interface 30050 may be optional components. As described above, the V2X communication apparatus may be an On Board Unit (OBU) or a Road Side Unit (RSU), or included in an OBU or an RSU.

The RF unit 30030 may be connected to the processor 30020 to transmit/receive wireless signals. The RF unit 30030 can upconvert the data received from the processor 30020 to the transmit and receive band and transmit the signal. The RF unit 30030 may include subblocks as shown in FIG.

The processor 30020 may be connected to the RF unit 22030 and implement each layer according to an ITS system (or apparatus) or a WAVE system (or apparatus). In other words, the V2X communication apparatus 30000 may implement a part or the whole functions of the layers described above, for example, an application layer, a facility layer, a network/transport layer and an access layer through the processor 30020. That is, the V2X communication apparatus 30000 may perform processing of each layer through the processor 30020.

As an embodiment, the processor 30020 may include a single processing unit for performing the functions of the layers described above. However, according to an embodiment, the processor 30020 may include a plurality of processing units for performing the functions of the layers described above. For example, the processor 30020 may include a first processing unit for performing the function of application layer, a second processing unit for performing the functions of facility layer, network/transport layer and LLC layer and/or a third processing unit for performing the functions of MAC layer and physical layer. As an embodiment, the first processing unit may be an application electronic control unit (ECU) for providing a specific application service. In addition, the second processing unit may be DSRC device processor for generating, encoding and decoding a V2X message for a specific application service. Furthermore, the third processing unit may be Dedicated short-range communications (DSRC) radio unit for transmitting radio data including a V2X message.

The processor 30020 may be configured to perform an operation according to various embodiments of the present invention according to the drawing and description described above. In addition, at least one of a module, data, program or software that implements an operation of the V2X communication apparatus 30000 according to various embodiments of the present invention described above may be stored in the memory 30010 and executed by the processor 30020.

The memory 30010 is connected to the processor 30020 and stores various types of information for executing the processor 30020. The memory 30010 may be included interior of the processor 30020 or installed exterior to the processor 30020 and connected to the processor 30020 via a known means.

The input interface 30040 may input user information. As an embodiment, the input interface may be a touch pad, a microphone that receives a voice input of a user, and the like, for example. The output interface 30050 may output information. As an embodiment, the output interface may be a display that displays visual information, a speaker that outputs hearing information. The V2X communication apparatus may provide safety warning and the like according to the embodiment of FIG. 27 through the output interface.

The detailed configuration of the V2X communication apparatus 30000 of FIG. 30 may be implemented such that the various embodiments of the present invention described above may be independently applied or two or more embodiments are applied together. All the description of the disclosure described above as well as the description related to FIG. 29 below may be applied to the method of processing a V2X message like the V2I message of the V2X communication apparatus 30000 shown in FIG. 30.

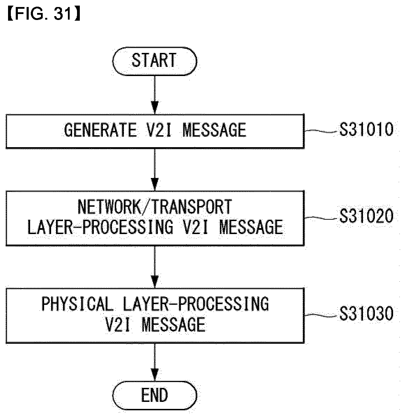

FIG. 31 is a flowchart illustrating a method for transmitting a V2I message by a V2X communication apparatus according to an embodiment of the present invention. In the embodiment of FIG. 31, the V2X apparatus may correspond to a Road Side Unit (RSU) of an infrastructure or may be included in an RSU. As described above, a generation of the V2I message may be performed by a processor of the V2X communication apparatus.

The V2X communication apparatus (or V2X apparatus) may generating a V2I message (step, S31010).

The V2I message may be a message for providing a V2I service, which is a service between a vehicle and an infra or a message for a V2I application for providing the V2I service. As an embodiment, the V2I message may include a first container (or common container) including information commonly used for the V2I service (or V2I application) and a second container (or application container) including information used for a specific V2I service (or specific V2I application).

As an embodiment, the first container may include all or a portion of the information contained in the common container of the embodiment of FIG 13. For example, the first container may include message ID information indicating an identifier of the V2I message.

As an embodiment, in the case that a specific application is an application related to a work zone safety, the second container may include a part or the whole information included in the application container of embodiments of FIG. 14, FIG. 17, FIG. 20, FIG. 21, FIG. 27 and/or FIG. 28, in addition, include a specific combination of the information included in the application container of each embodiment.

For example, the second container may include first worker presence information indicating whether a worker is present in a work zone, second worker presence information indicating whether a worker is present for each vehicle lane in a work zone and/or worker state information representing a state of a worker for each lane in a work zone.

For another example, the second container may include first heavy equipment presence information indicating whether a heavy equipment is present in a work zone, second worker presence information indicating whether a heavy equipment is present in each lane in the work zone and/or heavy equipment state information representing a state of a heavy equipment for each lane in the work zone. As an embodiment, the heavy equipment state information may provide the number of heavy equipments in each lane according to a predefined scheme or a range of the number of heavy equipments in each lane as the state of a heavy equipment.

The V2X communication apparatus may perform network/transport layer-processing of the V2I message (step, S31020). As an embodiment, the step of network/transport layer-processing may include generating a WSM message by processing the V2I message based on Wave Short Message Protocol (WSMP). As described above, the network/transport layer-processing may be performed by the processor of the V2X communication apparatus. This is as described above with reference to FIGS. 10 and 30.

The V2X communication apparatus may generate a signal frame by physical layer-processing the V2I message (step, S31030). In the present disclosure, the signal frame may be referred to a V2I frame, a message frame, a V2I message frame, a frame or a signal frame. As described above, the physical layer-processing may be performed by the processor of the V2X communication apparatus. This is as described above with reference to FIGS. 7, 10, 11 and 30.

In the embodiment of FIG. 31, the V2X communication apparatus may correspond to a transmission apparatus that generates a V2I message and transmits the V2X message to a peripheral V2X communication apparatus. However, the V2X communication apparatus is not limited to the transmission apparatus. The V2X communication apparatus may also correspond to a reception apparatus that receives a V2I message and provides a V2I service based on the V2X message. In the case that the V2X communication apparatus is the reception apparatus, the flowchart of FIG. 31 may be applied as below.

The V2X communication apparatus may receive a communication signal including at least one signal frame and physical layer-parse the communication signal. As an embodiment, the signal frame may include a V2I message. This is as described above with reference to FIGS. 7, 10, 11 and 30. Furthermore, the V2X communication apparatus may network/transport layer-parse a WSM packet or an IP packet including the V2I message. Through this, the V2X communication apparatus may obtain the V2I message. This is as described above with reference to FIGS. 10 and 30. In addition, the V2X communication apparatus may provide a specific V2I service based on the V2I message. This is as described above with reference to FIGS. 16, 19 and 23.

In the aforementioned embodiments, the elements and characteristics of the present invention have been combined in specific forms. Each of the elements or characteristics may be considered to be optional unless otherwise described explicitly. Each of the elements or characteristics may be implemented in a form to be not combined with other elements or characteristics. Furthermore, some of the elements and/or the characteristics may be combined to form an embodiment of the present invention. The sequence of the operations described in the embodiments of the present invention may be changed. Some of the elements or characteristics of an embodiment may be included in another embodiment or may be replaced with corresponding elements or characteristics of another embodiment. It is evident that an embodiment may be constructed by combining claims not having an explicit citation relation in the claims or may be included as a new claim by amendments after filing an application.

The embodiment according to the present invention may be implemented by various means, for example, hardware, firmware, software or a combination of them. In the case of an implementation by hardware, the embodiment of the present invention may be implemented using one or more application-specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and the like.

In the case of an implementation by firmware or software, the embodiment of the present invention may be implemented in the form of a module, procedure or function for performing the aforementioned functions or operations. Software code may be stored in the memory and driven by the processor. The memory may be located inside or outside the processor and may exchange data with the processor through a variety of known means.

It is evident to those skilled in the art that the present invention may be materialized in other specific forms without departing from the essential characteristics of the present invention. Accordingly, the detailed description should not be construed as being limitative from all aspects, but should be construed as being illustrative. The scope of the present invention should be determined by reasonable analysis of the attached claims, and all changes within the equivalent range of the present invention are included in the scope of the present invention.

### [Mode for Invention]

It is understood to those skilled in the art that various alterations and modifications are available in the present invention without departing from the concept or the scope of the present invention. Accordingly, it is intended that the present invention includes alterations and modifications of the present invention provided in the attached claims and the equivalence thereof.

Both of the device and the method invention are described in the present disclosure, and the description of both of the device and the method invention may be applied mutually complementarily.

Various embodiments are described in the Best Mode for Invention.

### [Industrial Applicability]

The present invention is used in a series of V2X communication field.

It is understood to those skilled in the art that various alterations and modifications are available in the present invention without departing from the concept or the scope of the present invention. Accordingly, it is intended that the present invention includes alterations and modifications of the present invention provided in the attached claims and the equivalence thereof.

## Claims

1. A method for transmitting a V2I message of a V2X communication apparatus, comprising:
generating a V2I message for providing V2I service which is a service between a vehicle and an infra, wherein the V2I message includes a first container including information commonly used for the V2I service and a second container including information used for a specific V2I service;
network/transport layer-processing the V2I message; and
generating a signal frame by physical layer-processing the V2I message,
wherein the first container includes message ID information representing an identifier of the V2I message.

2. The method for transmitting a V2I message of claim 1, when the specific V2I service is a service related to work zone safety, the second container includes first worker presence information indicating whether a worker is present in a work zone.

3. The method for transmitting a V2I message of claim 1, when the specific V2I service is a service related to work zone safety, the second container includes second worker presence information indicating whether a worker is present for each lane in a work zone.

4. The method for transmitting a V2I message of claim 2, wherein the second container further includes worker state information representing a state of a worker for each lane in a work zone.

5. The method for transmitting a V2I message of claim 4, wherein the worker state information provides a number of workers in each lane according to a predefined scheme or a range of a number of workers in each lane as the state of a worker.

6. The method for transmitting a V2I message of claim 1, wherein the second container further includes at least one of first heavy equipment presence information indicating whether a heavy equipment is present in a work zone, second worker presence information indicating whether a heavy equipment is present in each lane in the work zone or heavy equipment state information representing a state of a heavy equipment for each lane in the work zone.

7. The method for transmitting a V2I message of claim 1, wherein the step of network/transport layer-processing includes generating a WSM message by processing the V2I message based on Wave Short Message Protocol (WSMP).

8. A V2X communication apparatus, comprising:
an RF unit configured to transmit and receive a radio signal; and
a processor configured to control the RF unit,
wherein the process is configured to:
generate a V2I message for providing V2I service which is a service between a vehicle and an infra, wherein the V2I message includes a first container including information commonly used for the V2I service and a second container including information used for a specific V2I service;
network/transport layer-process the V2I message; and
generate a signal frame by physical layer-processing the V2I message,
wherein the first container includes message ID information representing an identifier of the V2I message.

9. The V2X communication apparatus of claim 8, when the specific V2I service is a service related to work zone safety, the second container includes first worker presence information indicating whether a worker is present in a work zone.

10. The V2X communication apparatus of claim 8, when the specific V2I service is a service related to work zone safety, the second container includes second worker presence information indicating whether a worker is present for each lane in a work zone.

11. The V2X communication apparatus of claim 9, wherein the second container further includes worker state information representing a state of a worker for each lane in a work zone.

12. The V2X communication apparatus of claim 11, wherein the worker state information provides a number of workers in each lane according to a predefined scheme or a range of a number of workers in each lane as the state of a worker.

13. The V2X communication apparatus of claim 9, wherein the second container further includes at least one of first heavy equipment presence information indicating whether a heavy equipment is present in a work zone, second worker presence information indicating whether a heavy equipment is present in each lane in the work zone or heavy equipment state information representing a state of a heavy equipment for each lane in the work zone.

14. The V2X communication apparatus of claim 8, wherein the step of network/transport layer-processing includes generating a WSM message by processing the V2I message based on Wave Short Message Protocol (WSMP).
